(19) Europäisches Patentamt
European Patent Office
Office européen des brevets

(11) **EP 4 135 093 A1**

(12) **EUROPEAN PATENT APPLICATION**
published in accordance with Art. 153(4) EPC

(43) Date of publication:
**15.02.2023 Bulletin 2023/07**

(21) Application number: **21783700.4**

(22) Date of filing: **07.04.2021**

(51) International Patent Classification (IPC):
*H01M 10/0585* $^{(2010.01)}$   *H01M 4/134* $^{(2010.01)}$
*H01M 4/46* $^{(1974.07)}$   *H01M 10/0562* $^{(2010.01)}$
*H01M 50/434* $^{(2021.01)}$   *H01M 50/46* $^{(2021.01)}$

(52) Cooperative Patent Classification (CPC):
**H01M 4/134; H01M 4/46; H01M 10/0562;
H01M 10/0585; H01M 50/434; H01M 50/46;**
Y02E 60/10; Y02P 70/50

(86) International application number:
**PCT/JP2021/014744**

(87) International publication number:
**WO 2021/206118 (14.10.2021 Gazette 2021/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.04.2020 JP 2020070385**

(71) Applicant: **SUMITOMO CHEMICAL COMPANY,
LIMITED**
**Tokyo 103-6020 (JP)**

(72) Inventors:
• **YAMAGUCHI, Takitaro**
**Tsukuba-shi, Ibaraki 300-3294 (JP)**
• **MATSUMOTO, Shingo**
**Tsukuba-shi, Ibaraki 300-3294 (JP)**
• **KUMAGAI, Toshiaki**
**Niihama-shi, Ehime 792-8521 (JP)**
• **MATSUO, Yoji**
**Niihama-shi, Ehime 792-8521 (JP)**

(74) Representative: **Vossius & Partner
Patentanwälte Rechtsanwälte mbB
Siebertstraße 3
81675 München (DE)**

(54) **LAMINATE FOR LITHIUM SECONDARY BATTERY**

(57)     Provided is a laminate for a lithium secondary battery including: a metal anode configured to occlude and release lithium ions; a cathode configured to occlude and release lithium ions; and an electrolyte, in which the metal anode is formed of an aluminum-containing metal, the metal anode has a plate shape, and a surface of flat surfaces of the metal anode facing the cathode has a ceramic separator or a solid electrolyte layer.

FIG. 1

**Description**

[Technical Field]

The present invention relates to a laminate for a lithium secondary battery.
Priority is claimed on Japanese Patent Application No. 2020-070385, filed April 9, 2020, the content of which is incorporated herein by reference.

[Background Art]

Rechargeable lithium secondary batteries have been already in practical use not only for small power sources in mobile phone applications, notebook personal computer applications, and the like but also for medium-sized and large-sized power sources in automotive applications, power storage applications, and the like.
As for an anode included in a lithium secondary battery, studies are being conducted to improve battery performance by using a material having a theoretical capacity higher than that of graphite, which is an anode material in the related art. As such a material, as with graphite, for example, a metal material capable of occluding and releasing lithium ions has attracted attention.
As an example of an anode formed of a metal material, for example, Patent Document 1 describes an anode which is a porous aluminum alloy and is formed of an anode active material for a secondary battery containing at least one kind of silicon or tin.

[Citation List]

[Patent Document]

[Patent Document 1]
JP-A-2011-228058

[Summary of Invention]

[Technical Problem]

In a charging process and a discharging process of the lithium secondary battery, a reversible reaction of insertion and desorption of lithium ions into and from the electrodes occur. For example, during charging of a lithium secondary battery, lithium ions are desorbed from the anode and lithium ions are inserted into the cathode. During discharging of the lithium secondary battery, lithium ions are desorbed from the cathode and lithium ions are inserted into the anode.
The lithium secondary battery is known to have a laminated configuration in which cathodes, separators, and anodes are alternately laminated. The separator is provided to prevent a short circuit between the cathode and the anode. As the application fields of lithium secondary batteries expand, a smooth movement of lithium ions and an improvement in battery characteristics are required.
The present invention has been made in view of the above circumstances, and an object of the present invention is to provide a laminate for a lithium secondary battery in which lithium ions can smoothly move and battery characteristics of a lithium secondary battery can be improved.

[Solution to Problem]

The present invention includes the following [1] to [7].

[1] A laminate for a lithium secondary battery including: a plate-shaped aluminum anode configured to occlude and release lithium ions; and a ceramic separator or a solid electrolyte layer laminated on one of principal surfaces of the aluminum anode.
[2] The laminate for a lithium secondary battery according to [1], in which the aluminum anode and the ceramic separator or the solid electrolyte layer are integrated.
[3] The laminate for a lithium secondary battery according to [1] or [2], in which the aluminum anode, the ceramic separator or the solid electrolyte layer, and a plate-shaped cathode configured to occlude and release lithium ions are laminated in this order.
[4] The laminate for a lithium secondary battery according to any one of [1] to [3], in which the aluminum anode is formed of a metal in which a non-aluminum metal phase is dispersed in an aluminum metal phase.

[5] The laminate for a lithium secondary battery according to any one of [1] to [4], in which the aluminum anode has an average corrosion rate of 0.2 mm/year or less measured by an immersion test under the following immersion conditions,

[immersion conditions]

immersion solution: 3.5% NaCl aqueous solution adjusted to a pH of 3 using acetic acid as a pH adjuster,
immersion temperature: 30°C,
immersion time: 72 hours.

[6] The laminate for a lithium secondary battery according to any one of [1] to [5], in which the aluminum anode has a Vickers hardness of 10 Hv or more and 70 Hv or less.

[7] The laminate for a lithium secondary battery according to any one of [1] to [6], in which the aluminum anode is a rolled material, and in a cumulative frequency distribution curve of an absolute value of an angle formed by a rolled surface of the aluminum anode and a plane perpendicular to a {111} plane, which is obtained by measuring a surface of the aluminum anode by an electron backscatter diffraction method, when a total is set to 100%, an angle at which a cumulative frequency from a low angle side is 50% or more is 20° or less.

[8] The laminate for a lithium secondary battery according to any one of [1] to [7], in which the aluminum anode is a rolled material, and in a cumulative frequency distribution curve of an absolute value of an angle formed by a rolling direction of the aluminum anode and a normal to a {111} plane, which is obtained by measuring a surface of the aluminum anode by an electron backscatter diffraction method, when a total is set to 100%, an angle at which a cumulative frequency from a low angle side is 50% or more is 20° or less.

The present invention includes the following [9] to [12].

[9] A laminate for a lithium secondary battery including: a plate-shaped aluminum anode configured to occlude and release lithium ions; and a ceramic separator or a solid electrolyte layer laminated on one of principal surfaces of the aluminum anode, in which the aluminum anode is a rolled material, and in a cumulative frequency distribution curve of an absolute value of an angle formed by a rolled surface of the aluminum anode and a plane perpendicular to a {111} plane, which is obtained by measuring a surface of the aluminum anode by an electron backscatter diffraction method, when a total is set to 100%, an angle at which a cumulative frequency from a low angle side is 50% or more is 20° or less.

[10] A laminate for a lithium secondary battery including: a plate-shaped aluminum anode configured to occlude and release lithium ions; and a ceramic separator or a solid electrolyte layer laminated on one of principal surfaces of the aluminum anode, in which the aluminum anode is a rolled material, and in a cumulative frequency distribution curve of an absolute value of an angle formed by a rolling direction of the aluminum anode and a normal to a {111} plane, which is obtained by measuring a surface of the aluminum anode by an electron backscatter diffraction method, when a total is set to 100%, an angle at which a cumulative frequency from a low angle side is 50% or more is 20° or less.

[11] An aluminum anode configured to occlude and release lithium ions, in which the aluminum anode is a rolled material formed of an aluminum-containing metal, and in a cumulative frequency distribution curve of an absolute value of an angle formed by a rolled surface of the aluminum anode and a plane perpendicular to a {111} plane, which is obtained by measuring a surface of the aluminum anode by an electron backscatter diffraction method, when a total is set to 100%, an angle at which a cumulative frequency from a low angle side is 50% or more is 20° or less.

[12] An aluminum anode configured to occlude and release lithium ions, in which the aluminum anode is a rolled material formed of an aluminum-containing metal, and in a cumulative frequency distribution curve of an absolute value of an angle formed by a rolling direction of the aluminum anode and a normal to a {111} plane, which is obtained by measuring a surface of the aluminum anode by an electron backscatter diffraction method, when a total is set to 100%, an angle at which a cumulative frequency from a low angle side is 50% or more is 20° or less.

The present invention includes the following [13] to [15].

[13] The laminate for a lithium secondary battery according to any one of [1] to [6], in which the aluminum anode is a rolled material, and in a cumulative frequency distribution curve of an absolute value of an angle formed by a rolled surface of the aluminum anode and a normal to a {111} plane, which is obtained by measuring a surface of the aluminum anode by an electron backscatter diffraction method, when a total is set to 100%, an angle at which a cumulative frequency from a low angle side is 50% or more is 20° or less.

[14] A laminate for a lithium secondary battery including: a plate-shaped aluminum anode configured to occlude and release lithium ions; and a ceramic separator or a solid electrolyte layer laminated on one of principal surfaces of the aluminum anode, in which the aluminum anode is a rolled material, and in a cumulative frequency distribution curve of an absolute value of an angle formed by a rolled surface of the aluminum anode and a normal to a {111} plane, which is obtained by measuring a surface of the aluminum anode by an electron backscatter diffraction method, when a total is set to 100%, an angle at which a cumulative frequency from a low angle side is 50% or more is 20° or less.

[15] An aluminum anode configured to occlude and release lithium ions, in which the aluminum anode is a rolled material formed of an aluminum-containing metal, and in a cumulative frequency distribution curve of an absolute value of an angle formed by a rolled surface of the aluminum anode and a normal to a {111} plane, which is obtained by measuring a surface of the aluminum anode by an electron backscatter diffraction method, when a total is set to 100%, an angle at which a cumulative frequency from a low angle side is 50% or more is 20° or less.

[Advantageous Effects of Invention]

According to the present invention, it is possible to provide a laminate for a lithium secondary battery in which lithium ions can move smoothly and the battery characteristics of the lithium secondary battery can be improved.

[Brief Description of Drawings]

Fig. 1 is a schematic view showing an example of a cross section of a laminate for a lithium secondary battery.
Fig. 2 is a schematic view showing an example of a cross section of a laminate for a lithium secondary battery.
Fig. 3 is a schematic view showing an example of a cross section of a laminate for a lithium secondary battery.
Fig. 4 is a schematic view showing an example of a cross section of a laminate for a lithium secondary battery.
Fig. 5 is a schematic configuration view showing an example of a lithium secondary battery.
Fig. 6 is a schematic configuration view showing an example of the lithium secondary battery.
Fig. 7 shows charge/discharge curves of lithium secondary batteries using a laminate of Example 1.
Fig. 8 shows cumulative frequency distribution curves of aluminum anodes 11 to 14.

[Description of Embodiments]

<Laminate for Lithium Secondary Battery>

A laminate for a lithium secondary battery of the present embodiment will be described.

Hereinafter, the laminate for a lithium secondary battery according to the present embodiment will be described with reference to the drawings. In all the drawings below, the dimensions and ratios of each constituent element are appropriately different in order to make the drawings easier to see.

Hereinafter, the "laminate for a lithium secondary battery" is sometimes referred to as a "laminate".

[Overall Configuration 1]

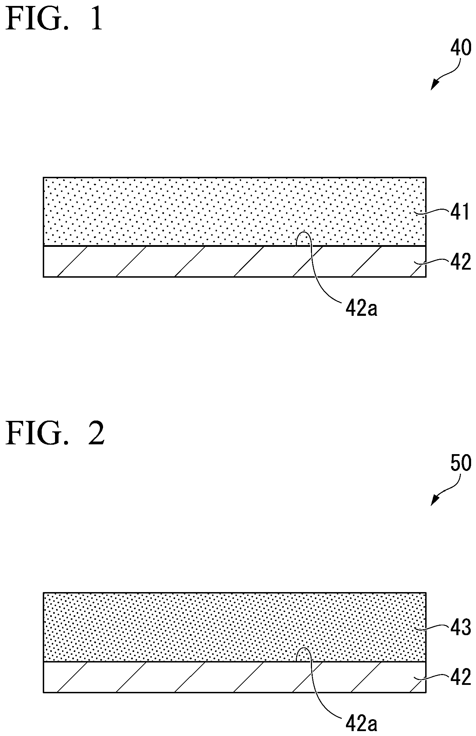

Fig. 1 shows a laminate 40 of the present embodiment. The laminate 40 includes an aluminum anode 42 and a ceramic separator 41. The aluminum anode 42 has a plate shape and is formed of an aluminum-containing metal capable of occluding and releasing lithium ions.

In the present embodiment, the "plate shape" means a three-dimensional shape having at least two principal surfaces facing each other. In the "plate-shaped" aluminum anode 42, the distance between the two facing principal surfaces described above corresponds to the thickness of the aluminum anode 42.

As the thickness of the aluminum anode 42, various values can be adopted. As the plate-shaped aluminum anode 42, there are a thin film-shaped electrode having flexibility that is easily curved and bent, and a thin plate-shaped electrode that is less likely to be curved and bent.

The aluminum anode 42 is provided with the ceramic separator 41 on one surface 42a of the two principal surfaces. The ceramic separator 41 has both a role of electrically insulating a cathode and an anode from each other and a role of holding an electrolytic solution.

In the laminate 40, it is preferable that the aluminum anode 42 and the ceramic separator 41 are integrated. In this specification, the term "integrated" means that the aluminum anode 42 and the ceramic separator 41 move together when deformed.

In this laminate 40, the aluminum anode 42 and the ceramic separator 41 are less likely to be shifted or peeled from each other even in a case where strain is generated by an external force. Therefore, for example, even if strain is generated in the laminate 40, there is no shift between the aluminum anode 42 and the ceramic separator 41, and a short circuit can be prevented.

[Overall Configuration 2]

Fig. 2 shows a laminate 50 of the present embodiment. The laminate 50 includes the aluminum anode 42 and a solid electrolyte layer 43. In the laminate 50, it is preferable that the aluminum anode 42 and the solid electrolyte layer 43 are integrated.

In the aluminum anode 42, the solid electrolyte layer 43 is provided on one surface 42a of the two principal surfaces.

In the laminate 50, there is a case where the solid electrolyte layer 43 serves as a separator. In this case, the separator may not be required when a lithium secondary battery is manufactured.

[Overall Configuration 3]

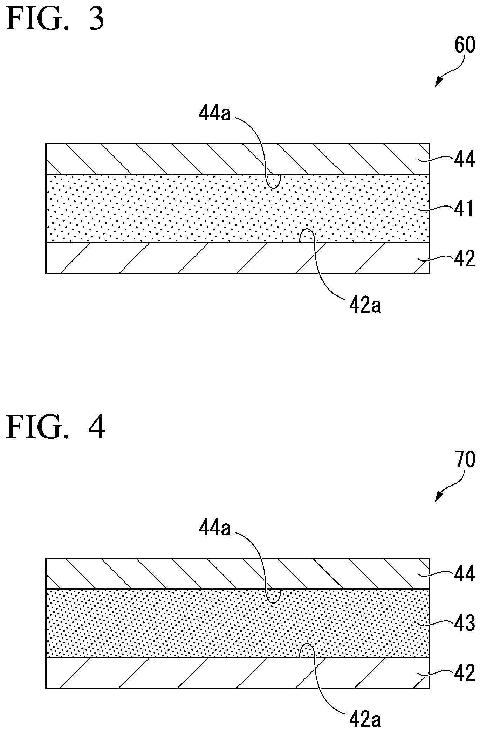

Fig. 3 shows a laminate 60 of the present embodiment. In the laminate 60, the aluminum anode 42, the ceramic separator 41, and a cathode 44 are laminated in this order.

The cathode 44 is formed of a material capable of occluding and releasing lithium ions. The cathode 44 has a plate shape. The laminate 60 is provided with the ceramic separator 41 on a surface 44a of the cathode 44 facing the aluminum anode 42.

In the laminate 60, it is preferable that the aluminum anode 42 and the ceramic separator 41 are integrated. Furthermore, the cathode 44 and the ceramic separator 41 may be integrated.

[Overall Configuration 4]

Fig. 4 shows a laminate 70 of the present embodiment. In the laminate 70, the aluminum anode 42, the solid electrolyte layer 43, and the cathode 44 are laminated in this order. In the laminate 70, it is preferable that the aluminum anode 42 and the solid electrolyte layer 43 are integrated.

The laminate 70 is provided with the solid electrolyte layer 43 on the surface 44a of the cathode 44 facing the aluminum anode 42.

«Aluminum Anode»

The aluminum anode is preferably formed of an aluminum-containing metal.

The aluminum anode is preferably aluminum anodes 1 to 4 described below.

[Aluminum Anode 1]

The aluminum anode 1 is formed of an aluminum-containing metal. The aluminum-containing metal acts as an anode active material.

In the aluminum-containing metal of the aluminum anode 1, a non-aluminum metal phase is dispersed in an aluminum metal phase.

In the present embodiment, the non-aluminum metal phase means a metal phase that does not contain aluminum.

The non-aluminum metal phase is preferably formed of a non-aluminum metal compound containing one or more selected from the group consisting of Si, Ge, Sn, Ag, Sb, Bi, In, and Mg.

The non-aluminum metal phase is more preferably formed of a non-aluminum metal compound containing one or more selected from the group consisting of Si, Ge, Sn, Ag, Sb, Bi, and In.

The non-aluminum metal phase is preferably formed of non-aluminum metal compound particles.

The non-aluminum metal compound forming the non-aluminum metal phase has a very large occlusion amount of lithium. Therefore, the non-aluminum metal compound has a large volume expansion during insertion of lithium and a large volume contraction during desorption of lithium. The strain generated by the expansion and contraction develops into cracks of the non-aluminum metal particles, and refinement occurs in which the non-aluminum metal compound particles become smaller. The refinement of the non-aluminum metal compound acting as the anode active material during charging and discharging causes a shortening of the cycle life.

The aluminum anode 1 is a metal in which the non-aluminum metal phase is dispersed in the aluminum metal phase. In other words, the non-aluminum metal compound particles are coated with aluminum, which can form an alloy with lithium. When the non-aluminum metal compound particles are coated with aluminum, the non-aluminum metal compound particles are less likely to crack and are therefore less likely to be refined. Therefore, even in a case where charging and discharging of the lithium secondary battery are repeated, an initial discharge capacity is easily retained. That is, the lithium secondary battery can achieve a good discharge capacity retention ratio.

The amount of the non-aluminum metal phase in the aluminum anode 1 preferably satisfies 0.01 mass% or more and 8 mass% or less with respect to the total amount of the aluminum metal phase and the non-aluminum metal phase. The lower limit of the amount of the non-aluminum metal phase is preferably 0.02 mass%, more preferably 0.05 mass%, and particularly preferably 0.1 mass%.

The upper limit of the amount of the non-aluminum metal phase is preferably 7 mass%, more preferably 6 mass%, and particularly preferably 5 mass%.

The upper limit and the lower limit thereof can be randomly combined. As an example of the combination, the amount of the non-aluminum metal phase is 0.02 mass% or more and 7 mass% or less, 0.05 mass% or more and 6 mass% or less, and 0.1 mass% or more and 5 mass% or less.

When the amount of the non-aluminum metal phase is equal to or more than the lower limit, a metal or metal compound other than aluminum that can contribute to the occlusion of lithium can be sufficiently secured. When the amount of the non-aluminum metal phase is equal to or less than the upper limit, the dispersed state of the non-aluminum metal phase in the aluminum metal phase tends to be good.

Furthermore, when the amount of the non-aluminum metal phase is equal to or less than the upper limit, rolling is easily performed.

The non-aluminum metal phase may contain an optional metal other than Si, Ge, Sn, Ag, Sb, Bi, In, and Mg. Examples of the optional metal include Mn, Zn, and Ni.

The aluminum anode 1 is preferably an Al-Si binary alloy, or an Al-Si-Mn ternary alloy. In the case of a ternary alloy, it is preferable that each metal is uniformly dissolved.

In a case where the non-aluminum metal phase is Si, Sr may be further contained in order to promote the refinement of the non-metal aluminum phase. As a method for adding Sr to promote the refinement of Si, the method described in Journal of Japan Institute of Light Metals Volume 37 Issue 2 (1987) pp 146-152 can be used.

In a binarized image of the aluminum anode 1 obtained under the following image acquisition conditions, the ratio of an area corresponding to the non-aluminum metal phase to the sum of an area corresponding to the aluminum metal phase and the area corresponding to the non-aluminum metal phase preferably satisfies 10% or less.

· Image Acquisition Conditions

The aluminum anode 1 is rolled into a foil having a thickness of 0.5 mm. The foil is cut perpendicular to a rolling direction, and a cut surface is etched with a 1.0 mass% sodium hydroxide aqueous solution. The aluminum metal phase and the non-aluminum metal phase have different solubilities in sodium hydroxide. Therefore, by etching, a height difference between irregularities of a portion corresponding to the non-aluminum metal phase and the aluminum metal phase exposed on the cut surface is formed due to the difference in solubility. Specifically, the portion corresponding to the aluminum metal phase becomes a convex portion, and the portion corresponding to the non-aluminum metal phase becomes a concave portion. When the height difference between the irregularities is formed on the cut surface, a clear contrast is shown during observation with a microscope, which will be described later.

Next, a cross-sectional image of the cut surface is acquired, and the cross-sectional image is subjected to image processing to obtain a binarized image in which the convex portion corresponding to the aluminum metal phase and the concave portion corresponding to the non-aluminum metal phase are each converted into black or white. The area of the concave portion corresponds to the area of the non-aluminum metal phase. The area of the convex portion corresponds to the area of the aluminum metal phase.

The cross-sectional image can be acquired using, for example, a metallurgical microscope. In the present embodiment, a metallurgical micrograph having a magnification of 200 times or more and 500 times or less is acquired. In a case where an object having a size of 1 $\mu$m or less is observed in the observation with a microscope, for example, a scanning electron microscope (SEM) is used for the observation. In this case, an SEM image having a magnification of 100 times or more and 10,000 times or less is acquired.

As the metallurgical microscope, for example, Nikon EPIPHOT 300 can be used.

The obtained SEM image or metallurgical micrograph having the above magnification is taken into a computer and subjected to binarization processing using an image analysis software. The binarization processing is a process of performing binarization using an intermediate value between the maximum brightness and the minimum brightness in the image. By the binarization processing, for example, a binarized image in which the portion corresponding to the aluminum metal phase is white and the portion corresponding to the non-aluminum metal phase is black can be obtained.

As the image analysis software, software that enables the binarization processing can be appropriately selected. As the image analysis software, specifically, Image J, Photoshop, Image Pro Plus, or the like can be used.

In the binarized image, the area corresponding to the aluminum metal phase is referred to as S1 and the area corresponding to the non-aluminum metal phase is referred to as S2.

The ratio $(S2 / [S1 + S2]) \times 100$ (%) of S2 to the sum of S1 and S2 satisfies preferably 10% or less, more preferably 6% or less, and particularly preferably 3% or less.

When the ratio of S2 is equal to or less than the upper limit, the non-aluminum metal compound is sufficiently coated with aluminum, so that the non-aluminum metal compound is even less likely to crack. Therefore, even in a case where charging and discharging of the lithium secondary battery are repeated, the initial discharge capacity is easily retained.

(Dispersed State)

In the aluminum anode 1, the non-aluminum metal phase is dispersed in the aluminum metal phase. Here, "the non-aluminum metal phase is dispersed in the aluminum metal phase" means a state in which a non-aluminum metal compound phase is present in an aluminum metal matrix.

For example, when the shape surrounded by the outer periphery of the concave portion corresponding to the non-aluminum metal compound phase observed in a case of observing the cross section of the foil-shaped aluminum anode 1 having a thickness of 0.5 mm is regarded as one circle, the number of circles observed preferably satisfies both the following conditions (1) and (2).

Condition (1): The number density of non-aluminum metal compound phases having a circle diameter of 0.1 $\mu$m or more and less than 100 $\mu$m is 1000 /mm$^2$ or less.

Condition (2): The number density of non-aluminum metal compound phases having a circle diameter of 100 $\mu$m or more is 25 /mm$^2$ or less.

The circle diameter of the concave portion corresponding to the non-aluminum metal compound can be obtained by the following method.

First, for example, a projected image of the circle of the concave portion corresponding to the non-aluminum metal compound is obtained from the SEM image photograph or the metallurgical micrograph. When the projected image of the obtained circle is sandwiched between parallel lines drawn in a certain direction, the distance (unidirectional particle diameter) between the parallel lines is defined as the circle diameter of the concave portion corresponding to the non-aluminum metal compound.

In addition, the "number density" means the density of the number of circles corresponding to the non-aluminum metal compound existing per unit area in the SEM photograph and the metallurgical micrograph.

(Manufacturing Method of Aluminum Anode 1)

The aluminum anode 1 is preferably manufactured by a manufacturing method including a step of casting an alloy and a rolling step.

· Step of Casting Alloy

In a case where casting is performed, first, a predetermined amount of the metal forming the non-aluminum metal phase is added to aluminum or high-purity aluminum to obtain a mixture 1. High-purity aluminum can be obtained by the method described later. Next, the mixture 1 is melted at 680°C or higher and 800°C or lower to obtain a molten alloy 1 of aluminum and the metal.

As the aluminum forming the aluminum phase, aluminum having a purity of 99.9 mass% or more, high-purity aluminum having a purity of 99.99 mass% or more, or the like can be used.

The metal forming the non-aluminum metal phase is one or more selected from the group consisting of Si, Ge, Sn, Ag, Sb, Bi, In, and Mg. As the metal forming the non-aluminum metal phase, for example, high-purity silicon having a purity of 99.999 mass% or more is used.

The molten alloy 1 is preferably subjected to a cleaning treatment of removing gas and non-metallic inclusions.

Examples of the cleaning treatment include the addition of a flux, a treatment of blowing an inert gas or chlorine gas, and a vacuum treatment of molten aluminum.

The vacuum treatment is performed, for example, under the condition of 700°C or higher and 800°C or lower, 1 hour or longer and 10 hours or shorter, and a degree of vacuum of 0.1 Pa or more and 100 Pa or less.

The molten alloy 1 cleaned by the vacuum treatment or the like is cast into an ingot using a mold. As the mold, an iron mold or a graphite mold heated to 50°C or higher and 200°C or lower is used.

The aluminum anode 1 can be cast by a method of pouring the molten alloy 1 at 680°C or higher and 800°C or lower into a mold. Alternatively, an ingot may also be obtained by semi-continuous casting.

· Rolling Step

The obtained alloy ingot can be directly cut and used as the aluminum anode 1. In the present embodiment, it is preferable that the ingot is rolled, extruded, forged, or the like to form a plate shape. In the present embodiment, it is more preferable to form a plate shape by rolling.

The rolling step of the ingot is, for example, a step of processing the ingot into a plate shape by performing hot rolling and cold rolling.

The hot rolling is repeatedly performed, for example, under the condition of a temperature of 350°C or higher and 550°C or lower and a working ratio per rolling pass of 2% or more and 30% or less until the aluminum ingot has a desired thickness.

Here, the "working ratio" means the rate of change in thickness when rolling is performed. For example, in a case where a plate having a thickness of 1 mm is worked to have a thickness of 0.7 mm, the working ratio is 30%.

After the hot rolling, it is preferable to perform an intermediate annealing treatment before the cold rolling, as necessary. The intermediate annealing treatment is performed, for example, by heating a hot-rolled plate material to raise the temperature, and then allowing the heated plate material to cool.

In the temperature raising step in the intermediate annealing treatment, the temperature may be raised to, for example, 350°C or higher and 550°C or lower. In addition, in the temperature raising step, for example, the temperature of 350°C or higher and 550°C or lower may be held for about 1 hour or longer and 5 hours or shorter.

In the cooling step in the intermediate annealing treatment, cooling may be performed immediately after the temperature is raised. In the cooling step, it is preferable to allow the plate material to cool to about 20°C.

The cooling step may be appropriately adjusted according to a desired size of the non-aluminum metal phase. When the cooling step is performed by allowing the plate material to cool rapidly, the non-aluminum metal phase tends to become smaller. On the other hand, when the cooling step is performed at a moderate cooling rate, the crystal structure of the metal forming the non-aluminum metal phase tends to grow.

It is preferable that the cold rolling is performed at a temperature lower than the recrystallization temperature of aluminum. In addition, it is preferable that the aluminum ingot is repeatedly rolled to have a desired thickness under the condition in which the rolling reduction per rolling pass is 1% or more and 20% or less. As for the temperature of the cold rolling, the temperature of the metal to be rolled may be adjusted to 10°C to 80°C or lower.

After the cold rolling, a heat treatment may further be performed. By performing the heat treatment, the crystal structure of the non-aluminum metal grows, and the amount of the non-aluminum metal phase can be increased.

The heat treatment after the cold rolling may be performed in an air atmosphere, a nitrogen atmosphere, a vacuum atmosphere, or the like.

By the heat treatment, a plate material that has been work-hardened can be softened.

By adjusting the heat treatment temperature and the heat treatment time, physical properties such as strength and conductivity can be adjusted within a desired range.

Examples of the heat treatment conditions include conditions in which a heat treatment is performed at a temperature of 300°C or higher and 400°C or lower for 3 hours or longer and 10 hours or shorter.

In the present embodiment, the aluminum anode 1 has a plate shape.

The thickness of the aluminum anode 1 is preferably 5 $\mu$m or more, more preferably 6 $\mu$m or more, and even more preferably 7 $\mu$m or more. In addition, the thickness is preferably 200 $\mu$m or less, more preferably 190 $\mu$m or less, and even more preferably 180 $\mu$m or less.

The upper limit and the lower limit of the thickness of the aluminum anode 1 can be randomly combined. The thickness of the aluminum anode 1 preferably satisfies 5 $\mu$m or more and 200 $\mu$m or less.

The thickness of the aluminum anode 1 may be measured using a thickness gauge or a caliper.

· Aluminum Purification Method

In a case of using high-purity aluminum as the material of the aluminum anode or the material of the alloy, examples of a refining method for purifying aluminum include a segregation method and a three-layer electrolytic method.

The segregation method is a purification method utilizing the segregation phenomenon during solidification of molten aluminum, and a plurality of methods have been put into practical use. As one form of the segregation method, there is a method of pouring molten aluminum into a container, and allowing refined aluminum to solidify from the bottom portion while heating and stirring the molten aluminum at the upper portion while rotating the container. By the segregation method, high-purity aluminum having a purity of 99.99 mass% or more can be obtained.

The three-layer electrolytic method is an electrolytic method for purifying aluminum. As one form of the three-layer electrolytic method, first, aluminum or the like having a relatively low purity (for example, a grade of a purity of 99.9 mass% or less in JIS-H2102) is put into an Al-Cu alloy layer. Thereafter, in the method, with an anode in a molten state, an electrolytic bath containing, for example, aluminum fluoride and barium fluoride is disposed thereon, and high-purity aluminum is deposited on a cathode.

High-purity aluminum having a purity of 99.999 mass% or more can be obtained by the three-layer electrolytic method.

The method of purifying aluminum is not limited to the segregation method and the three-layer electrolytic method, and other known methods such as a zone melting refining method and an ultra-high vacuum melting method may be used.

[Aluminum Anode 2]

The aluminum anode 2 is an aluminum-containing metal. The aluminum anode 2 has an average corrosion rate of 0.2 mm/year or less measured by an immersion test under the following immersion conditions.

(Immersion Conditions)

The aluminum-containing metal is formed into a test metal piece having a size of 40 mm in length, 40 mm in width, and 0.5 mm in thickness.
The test metal piece is immersed in a 3.5% NaCl aqueous solution adjusted to a pH of 3 using acetic acid as a pH adjuster, and the test metal piece is taken out after 72 hours. As for the immersion temperature, the temperature of the liquid is set to 30°C.
The degree of corrosion is represented by the amount of corrosion loss per day for a surface area of 1 mm$^2$ of the test metal piece in mg. That is, the degree of corrosion can be calculated by the following expression. A precision balance is used for measuring the mass. Degree of corrosion = (mass before immersion of test metal piece (mg) - mass after immersion of test metal piece (mg)) / (surface area of test metal piece (mm$^2$) $\times$ number of test days (day))
From the obtained degree of corrosion, the corrosion rate is calculated by the following method.

$$\text{Corrosion rate (mm/year)} = [\text{degree of corrosion} \times 365] \text{ / density of test piece}$$

$$(\text{g/cm}^3)$$

The test metal piece may be washed with ethanol or the like before being immersed in the 3.5% NaCl aqueous solution adjusted to a pH of 3.
The aluminum anode 2 is preferably made of an aluminum-containing metal represented by Composition Formula (1).

$$Al_x M^1_y M^2_z \dots \qquad (1)$$

(in Formula (1), $M^1$ is one or more selected from the group consisting of Mg, Ni, Mn, Zn, Cd, and Pb, $M^2$ is an unavoidable impurity, and 0 mass% $\leq y \leq 8$ mass% and $[x / (x + z)] \geq 99.9$ mass% are satisfied).

· $M^1$

In Formula (1), $M^1$ is more preferably one or more elements selected from the group consisting of Mg, Ni, Mn, and Zn.

• y

In Formula (1), y satisfies preferably 0.1 mass% $\leq y \leq 8.0$ mass%, preferably 0.5 mass% $\leq y \leq 7.0$ mass%, and particularly preferably 0.7 mass% $\leq y \leq 6.0$ mass%.
When the range of y is equal to or more than the above lower limit, the average corrosion rate can be controlled within the above range. In addition, when the range of y is equal to or less than the above upper limit, rolling can be performed without cracking during a rolling step at the time of casting.

· $M^2$

In Formula (1), $M^2$ is an unavoidable impurity such as a manufacturing residue that is unavoidably incorporated in a refining step of high-purity aluminum, and specifically, is a metal component other than aluminum and $M^1$. Examples of the unavoidable impurity include iron and copper.
In Formula (1), z is 0.1 mass% or less, preferably 0.05 mass% or less, and even more preferably 0.01 mass% or less.
In Formula (1), $[x / (x + z)]$ is preferably 99.95% or more, more preferably 99.99% or more, and particularly preferably 99.995% or more. The aluminum anode 2 contains highly pure aluminum in which $[x / (x + z)]$ is equal to or more than the above lower limit. A refining method for purifying aluminum will be described later.

Among the aluminum-containing metals represented by Formula (1), those having y = 0 may be described as high-purity aluminum. Among the aluminum-containing metals represented by Formula (1), those having y exceeding 0 may be described as a high-purity aluminum alloy.

As the aluminum anode 2 represented by Composition Formula (1), the high-purity aluminum or the high-purity aluminum alloy according to any one of the following (1) to (5) is preferable.

(1) High-purity aluminum-magnesium alloy 1

An alloy of 99.999% pure aluminum and magnesium. The amount of magnesium is 0.1 mass% or more and 4.0 mass% or less in the total amount of the aluminum-containing metal. The average corrosion rate is 0.04 mm/year to 0.06 mm/year.

(2) High-purity aluminum-magnesium alloy 2

An alloy of 99.9% pure aluminum and magnesium. The amount of magnesium is 0.1 mass% or more and 1.0 mass% or less in the total amount of the aluminum-containing metal. The average corrosion rate is 0.1 mm/year to 0.14 mm/year.

(3) High-purity aluminum-nickel alloy

An alloy of 99.999% pure aluminum and nickel. The amount of nickel is 0.1 mass% or more and 1.0 mass% or less in the total amount of the aluminum-containing metal. The average corrosion rate is 0.1 mm/year to 0.14 mm/year.

(4) High-purity aluminum-manganese-magnesium alloy

An alloy of 99.99% pure aluminum, manganese, and magnesium. The total amount of manganese and magnesium is 1.0 mass% or more and 2.0 mass% or less in the total amount of the aluminum-containing metal. The average corrosion rate is 0.03 mm/year to 0.05 mm/year.

(5) High-purity aluminum

99.999% pure aluminum. The average corrosion rate is 0.05 mm/year.

(Manufacturing Method of Aluminum Anode 2)

A manufacturing method of the aluminum anode 2 will be described separately for a manufacturing method 1 and a manufacturing method 2. The manufacturing method 1 is a manufacturing method in a case where the aluminum anode 2 is high-purity aluminum. The manufacturing method 2 is a manufacturing method in a case where the aluminum anode 2 is a high-purity aluminum alloy.

In the manufacturing method 1 and the manufacturing method 2, first, aluminum is purified. Examples of a method of purifying aluminum include the aluminum purification method described in (Manufacturing Method of Aluminum Anode 1).

Even in a case where aluminum is purified by the aluminum purification method, impurities such as manufacturing residues may be mixed. In the manufacturing method 1 and the manufacturing method 2, for example, the total amount of iron and copper contained in the aluminum is preferably 100 ppm or less, more preferably 80 ppm or less, and even more preferably 50 ppm or less.

· Manufacturing Method 1

The manufacturing method 1 preferably includes a step of casting high-purity aluminum and a rolling step.

· · Casting Step

The aluminum purified by the above-described method can be cast to obtain an aluminum ingot having a shape suitable for rolling.

In a case where casting is performed, for example, high-purity aluminum is melted at about 680°C or higher and 800°C or lower to obtain molten aluminum.

The molten aluminum is preferably subjected to a cleaning treatment of removing gas and non-metallic inclusions. Examples of the cleaning treatment include the same method as the cleaning treatment described for the aluminum anode 1.

The molten aluminum that has been cleaned is cast into an ingot using a mold.

As the mold, an iron mold or a graphite mold heated to 50°C or higher and 200°C or lower is used. The aluminum anode 2 can be cast by a method of pouring the molten aluminum at 680°C or higher and 800°C or lower into a mold. Alternatively, an ingot may also be obtained by semi-continuous casting.

· · Rolling Step

The obtained aluminum ingot can be directly cut and used as the aluminum anode 2. It is preferable that the aluminum ingot is rolled, extruded, forged, or the like to form a plate material. The ingot is more preferably rolled.

The rolling step can be performed by the same method as the rolling step described in the manufacturing method of the aluminum anode 1.

· · Manufacturing Method 2

The manufacturing method 2 preferably includes a step of casting a high-purity aluminum alloy and a rolling step.

· · Casting Step

In a case where casting is performed, first, a predetermined amount of a metal element is added to high-purity aluminum to obtain a mixture 2. Next, the mixture 2 is melted at 680°C or higher and 800°C or lower to obtain a molten alloy 2 of aluminum and the metal.

The metal element to be added is preferably one or more elements selected from the group consisting of Mg, Ni, Mn, Zn, Cd, and Pb. The metal containing these elements to be added preferably has a purity of 99 mass% or more.

A high-purity aluminum alloy ingot is obtained by the same method as the casting step in the manufacturing method of the aluminum anode 1 except that the molten alloy 2 is used.

· · Rolling Step

The rolling step is performed by the same method as the above-described manufacturing method 1.

The thickness of the aluminum anode 2 is preferably 5 $\mu$m or more, more preferably 6 $\mu$m or more, and even more preferably 7 $\mu$m or more. In addition, the thickness is preferably 200 $\mu$m or less, more preferably 190 $\mu$m or less, and even more preferably 180 $\mu$m or less.

The upper limit and the lower limit of the thickness of the aluminum anode 2 can be randomly combined. The thickness of the aluminum anode 2 is preferably 5 $\mu$m or more and 200 $\mu$m or less.

[Aluminum Anode 3]

The aluminum anode 3 is an aluminum-containing metal.

The Vickers hardness of the aluminum anode 3 is preferably 10 HV or more and 70 HV or less, more preferably 20 HV or more and 70 HV or less, even more preferably 30 HV or more and 70 HV or less, and particularly preferably 35 HV or more and 55 HV or less.

When the aluminum anode 3 occludes lithium, there are cases where strain is generated in the crystal structure of the metal forming the aluminum anode.

It is presumed that when the Vickers hardness is equal to or less than the upper limit, strain in the crystal structure during occlusion of lithium by the aluminum anode 3 can be relaxed, and the crystal structure can be maintained. Therefore, the lithium secondary battery using the aluminum anode 3 can retain the discharge capacity even in a case where charging and discharging are repeated.

As the Vickers hardness, a value measured by the following method is used.

[Measurement Method]

As an index of the hardness of the aluminum anode 3, the Vickers hardness (HV0.05) is measured using a micro Vickers hardness tester.

The Vickers hardness is a value measured according to JIS Z 2244:2009 "Vickers hardness test - Test method". The Vickers hardness is measured by pressing a square-based pyramid diamond indenter into the surface of a test piece, which is the aluminum anode 3, releasing the test force, and then calculating the diagonal length of the indentation left on the surface.

In the above standards, the hardness symbol is set to be changed by the test force. In the present embodiment, for example, the micro Vickers hardness scale HV0.05 at a test force of 0.05 kgf (= 0.4903 N) is applied.

[Aluminum Anode 4]

The aluminum anode 4 is a rolled material formed of an aluminum-containing metal.

In a cumulative frequency distribution curve of the absolute value of an angle formed by a rolled surface of the aluminum anode 4 and a normal to a {111} plane, which is obtained by measuring the surface of the aluminum anode 4 by an EBSD method, when the total is set to 100%, the angle at which the cumulative frequency from a low angle side is 50% or more is 20° or less.

The EBSD method stands for an electron backscatter diffraction method.

In this specification, the "angle formed by the rolled surface and the normal to the {111} plane of the metal crystal contained in the base metal" is an angle between the projection of the normal to the {111} plane on the rolled surface and the normal to the {111} plane, and is an angle of 90° or less. In a case where the rolled surface and the normal to the {111} plane are parallel, the angle formed as described above is not present. In this case, the angle formed is 0°.

In this specification, "the angle formed by the rolled surface and a plane perpendicular to the {111} plane" is defined as follows.

As for the angle formed by a rolled surface α and a plane β perpendicular to the {111} plane, straight lines 1α and 1β that pass through any point O on the line of intersection 1 between the two planes α and β and are respectively perpendicular to the line of intersection 1 on the rolled surface α and the plane β perpendicular to the {111} plane are drawn. The angle formed by the straight lines 1α and 1β is defined as the angle formed by the rolled surface α and the plane β perpendicular to the {111} plane.

In this specification, the "absolute value of the angle" is an absolute value when the angle is expressed in ±180° notation.

In a cumulative frequency distribution curve of the absolute value of an angle formed by a rolling direction of the aluminum anode 4 and the normal to the {111} plane, which is obtained by measuring the surface of the aluminum anode 4 by the EBSD method, when the total is set to 100%, the angle at which the cumulative frequency from the low angle side is 50% or more is preferably 20° or less.

(EBSD method)

The EBSD method is widely used as a method for analyzing the orientation distribution of a crystal texture. Generally, the EBSD method is used in a form in which a scanning electron microscope is equipped with an electron backscatter diffraction method.

As the scanning electron microscope, for example, JSM-7900F manufactured by JEOL Ltd. can be used.

As an electron backscatter diffraction detector, for example, Symmetry manufactured by Oxford Instruments can be used.

When using the EBSD method, it is preferable to first remove the coating formed on the surface of the aluminum anode 4 in order to acquire a clear electron backscatter diffraction image on the surface of the aluminum anode 4.

As a method for removing the coating on the surface, for example, chemical etching using an acid or the like or a ion etching using an argon ion or the like can be used.

Alternatively, the coating on the surface may be removed by mechanical polishing such as buffing.

From the viewpoint of preventing deterioration of the crystal texture due to the removal of the coating on the surface of the aluminum anode 4, a method of removing the coating on the surface by a flat surface argon ion milling method in which the surface of the aluminum anode 4 is obliquely irradiated with an argon ion beam so that the center of the argon ion beam and the center of rotation of a specimen are made eccentric to each other and thus a wide range is processed is preferable.

In a case of removing the coating on the surface of the aluminum anode 4 by the ion milling method, for example, IB-19520CCP manufactured by JEOL Ltd. can be used.

After removing the coating on the surface, the surface of the aluminum anode 4 is irradiated with an electron beam. Thereafter, the diffraction pattern of backscattered electrons is read by a device. The obtained diffraction pattern is taken into a computer, and the surface of the aluminum anode 4 is scanned while simultaneously performing crystal orientation analysis. Accordingly, indexing of crystals is performed at each measurement point such that the crystal orientation can be obtained. The crystal orientation calculated at each measurement point is recorded on the computer.

According to the crystal structure size of the aluminum anode 4, a pixel size is preferably 3 μm or less, and

more preferably 1 $\mu$m or less. Regarding an analysis region, it is preferable to perform the analysis in a region of 10 mm$^2$ or more in consideration of variation depending on the location of the crystal texture.

From the crystal orientation information at each measurement point recorded on the computer, the cumulative frequency distribution curve of the absolute value of the angle formed by the rolled surface of the aluminum anode 4 and the normal to the {111} plane of the aluminum-containing metal crystal is obtained.

It can be determined that the smaller the angle, the higher the orientation. In the aluminum anode 4, in the obtained cumulative frequency distribution curve of the absolute value of the angle, when the total is set to 100%, the angle at which the cumulative frequency from the low angle side is 50% or more is preferably 20° or less, more preferably 15° or less, and even more preferably 12° or less.

In addition, from the crystal orientation information at each measurement point recorded on the computer, the cumulative frequency distribution curve of the absolute value of the angle formed by the rolling direction of the aluminum anode 4 and the normal to the {111} plane of the aluminum-containing metal crystal is obtained.

It can be determined that the smaller the angle, the higher the orientation. In the aluminum anode 4, in the obtained cumulative frequency distribution curve of the absolute value of the angle, when the total is set to 100%, the angle at which the cumulative frequency from the low angle side is 50% or more is preferably 20° or less, more preferably 15° or less, and even more preferably 12° or less.

When the angle at which the cumulative frequency from the low angle side is 50% or more is equal to or less than the upper limit, it is thought that the {111} plane of the crystal of the aluminum-containing metal is oriented so as to be perpendicular to the rolled surface of the aluminum anode 4. With such an orientation, a crystal plane orientation suitable for the desorption and insertion of lithium is achieved. In addition, it is presumed that a crystal texture that is easy to adapt to a volume change that occurs during the desorption and insertion of lithium is achieved. Therefore, when the aluminum anode 4 is used, the discharge capacity retention ratio of the lithium secondary battery can be improved.

The aluminum anode 1 may have the properties of the aluminum anode 2.

Specifically, it is preferable that the aluminum anode 1 satisfies an average corrosion rate of 0.2 mm/year or less measured by the immersion test under the above immersion conditions.

The aluminum anode 1 may have the properties of the aluminum anode 3.

Specifically, it is preferable that the aluminum anode 1 has a Vickers hardness of 10 HV or more and 70 HV or less.

The aluminum anode 1 may have the properties of the aluminum anode 4.

Specifically, it is preferable that the aluminum anode 1 is a rolled material, and in the cumulative frequency distribution curve of the absolute value of the angle formed by the rolled surface of the aluminum anode and the normal to the {111} plane, which is obtained by measuring the surface of the aluminum anode by the electron backscatter diffraction method, when the total is set to 100%, the angle at which the cumulative frequency from the low angle side is 50% or more satisfies 20° or less.

The aluminum anode 1 may have the properties of the aluminum anode 4.

Specifically, it is preferable that the aluminum anode 1 is a rolled material, and in the cumulative frequency distribution curve of the absolute value of the angle formed by the rolling direction of the aluminum anode and the normal to the {111} plane, which is obtained by measuring the surface of the aluminum anode by the electron backscatter diffraction method, when the total is set to 100%, the angle at which the cumulative frequency from the low angle side is 50% or more satisfies 20° or less.

The aluminum anode 1 may have the properties of the aluminum anode 2 and the aluminum anode 3.

Specifically, it is preferable that the aluminum anode 1 satisfies an average corrosion rate of 0.2 mm/year or less measured by the immersion test under the above immersion conditions and a Vickers hardness of 10 HV or more and 70 HV or less.

The aluminum anode 2 may have the properties of the aluminum anode 3.

Specifically, it is preferable that the aluminum anode 2 satisfies a Vickers hardness of 10 HV or more and 70 HV or less.

The aluminum anode 1 may have the properties of the aluminum anode 2, the aluminum anode 3, and the aluminum anode 4.

Specifically, it is preferable that the aluminum anode 1 satisfies an average corrosion rate of 0.2 mm/year or less measured by the immersion test under the above immersion conditions and a Vickers hardness of 10 HV or more and 70 HV or less, the aluminum anode 1 is a rolled material, and in the cumulative frequency distribution curve of the absolute value of the angle formed by the rolled surface of the aluminum anode and the normal to the {111} plane, which is obtained by measuring the surface of the aluminum anode by the electron backscatter diffraction method, when the total is set to 100%, the angle at which the cumulative frequency from the low angle side is 50% or more satisfies 20° or less.

The aluminum anode 1 may have the properties of the aluminum anode 2, the aluminum anode 3, and the aluminum anode 4.

Specifically, it is preferable that the aluminum anode 1 satisfies an average corrosion rate of 0.2 mm/year or less measured by the immersion test under the above immersion conditions and a Vickers hardness of 10 HV or more and 70 HV or less, the aluminum anode 1 is a rolled material, and in the cumulative frequency distribution curve of the absolute value of the angle formed by the rolling direction of the aluminum anode and the normal to the {111} plane, which is obtained by measuring the surface of the aluminum anode by the electron backscatter diffraction method, when the total is set to 100%, the angle at which the cumulative frequency from the low angle side is 50% or more satisfies 20° or less.

The aluminum anode 2 may have the properties of the aluminum anode 3 and the aluminum anode 4.

Specifically, it is preferable that the aluminum anode 2 satisfies a Vickers hardness of 10 HV or more and 70 HV or less, the aluminum anode 1 is a rolled material, and in the cumulative frequency distribution curve of the absolute value of the angle formed by the rolled surface of the aluminum anode and the normal to the {111} plane, which is obtained by measuring the surface of the aluminum anode by the electron backscatter diffraction method, when the total is set to 100%, the angle at which the cumulative frequency from the low angle side is 50% or more satisfies 20° or less.

The aluminum anode 2 may have the properties of the aluminum anode 3 and the aluminum anode 4.

Specifically, it is preferable that the aluminum anode 2 satisfies a Vickers hardness of 10 HV or more and 70 HV or less, the aluminum anode 1 is a rolled material, and in the cumulative frequency distribution curve of the absolute value of the angle formed by the rolling direction of the aluminum anode and the normal to the {111} plane, which is obtained by measuring the surface of the aluminum anode by the electron backscatter diffraction method, when the total is set to 100%, the angle at which the cumulative frequency from the low angle side is 50% or more satisfies 20° or less.

[Compositional Analysis of Aluminum Anode]

The compositional analysis of the aluminum anode can be performed using an optical emission spectrometer. Accordingly, the amount of metal elements in the aluminum-containing metal can be quantified.

As the optical emission spectrometer, for example, a model: ARL-4460, manufactured by Thermo Fisher Scientific can be used. Alternatively, the metal elements can be more accurately quantified by a glow discharge mass spectrometer.

(Anode Current Collector)

In a case where an anode current collector is used in the aluminum anode, as the material of the anode current collector, there is a strip-shaped member formed of a metal material, such as Cu, Ni, or stainless steel, as a forming material. Among these, it is preferable to use Cu as the forming material and process Cu into a thin film shape because Cu is less likely to form an alloy with lithium and can be easily processed.

As a method of causing the anode current collector to hold an anode mixture, there is a method using press-forming, or a method of forming the anode mixture into a paste using a solvent or the like, applying the paste onto the anode current collector, drying the paste, and pressing the paste to be compressed.

<<Ceramic Separator>>

The ceramic separator 41 is a microporous membrane made of ceramic.

The ceramic contained in the ceramic separator 41 is preferably at least one selected from $MgO$, $Al_2O_3$, $ZrO_2$, $SiC$, $Si_3N_4$, $AlN$, and cordierite, and more preferably at least one selected from $MgO$, $Al_2O_3$, and $ZrO_2$.

The ceramic separator 41 may contain polyethylene beads or polypropylene beads. In this case, a shutdown function can be imparted to the ceramic separator in a high temperature state. The shutdown function means a function in which the components forming the separator are melted in a high temperature state, so that the movement path of lithium ions is blocked and charging or discharging is stopped.

As the polyethylene beads, for example, FLO-BEADS CL, FLO-BEADS HE, and FLO-THENE UF manufactured by Sumitomo Seika Chemicals Co., Ltd. can be used. As the polypropylene beads, for example, FLO-BEADS RP manufactured by Sumitomo Seika Chemicals Co., Ltd. can be used.

The median diameter of the polyethylene beads or polypropylene beads preferably satisfies 10 $\mu$m or more and 20 $\mu$m or less.

The ratio of the polyethylene beads or polypropylene beads to the total amount of the ceramic separator is preferably 1% or more and less than 10%, and more preferably 2% or more and 5% or less.

The temperature at which the shutdown function is exhibited can be appropriately adjusted depending on the kind of polyethylene beads or polypropylene beads.

The thickness of the ceramic separator is preferably 3 $\mu$m or more and 40 $\mu$m or less, more preferably 5 $\mu$m or more and 35 $\mu$m or less, and even more preferably 10 $\mu$m or more and 30 $\mu$m or less.

The air resistance of the separator according to the Gurley method defined by JIS P 8117 is preferably 50 sec/100 cc or more and 300 sec/100 cc or less, and more preferably 50 sec/100 cc or more and 200 sec/100 cc or less in order for the electrolyte to favorably permeate through the separator during battery use (during charging and discharging).

In addition, the porosity of the separator is preferably 30 vol% or more and 80 vol% or less, and more preferably 40 vol% or more and 70 vol% or less. The separator may be a laminate of separators having different porosities.

«Solid Electrolyte»

As the solid electrolyte that may be included in the solid electrolyte layer 43, a solid electrolyte that has lithium ion conductivity and is used in a known all-solid-state battery can be adopted. As such a solid electrolyte, there are an inorganic electrolyte and an organic electrolyte.

As the inorganic electrolyte, there are an oxide-based solid electrolyte, a sulfide-based solid electrolyte, and a hydride-based solid electrolyte. As the organic electrolyte, there is a polymer-based solid electrolyte.

(Oxide-Based Solid Electrolyte)

Examples of the oxide-based solid electrolyte include a perovskite-type oxide, a NASICON-type oxide, a LISICON-type oxide, and a garnet-type oxide.

As the perovskite-type oxide, there are a Li-La-Ti-based oxide such as $Li_aLa_{1-a}TiO_3$ (0 < a <1), a Li-La-Ta-based oxide such as $Li_bLa_{1-b}TaO_3$ (0 < b <1), and a Li-La-Nb-based oxide such as $Li_cLa_{1-c}NbO_3$ (0 < c < 1).

As the NASICON-type oxide, there are $Li_{1+d}Al_dTi_{2-d}(PO_4)_3$ ($0 \leq d \leq 1$). The NASICON-type oxide is an oxide represented by $Li_mM^1{}_nM^2{}_oP_pO_q$ (in the formula, $M^1$ is one or more elements selected from the group consisting of B, Al, Ga, In, C, Si, Ge, Sn, Sb, and Se, $M^2$ is one or more elements selected from the group consisting of Ti, Zr, Ge, In, Ga, Sn, and Al, m, n, o, p, and q are any positive numbers).

The LISICON-type oxide is an oxide represented by $Li_4M^3O_4$-$Li_3M^4O_4$ ($M^3$ is one or more elements selected from the group consisting of Si, Ge, and Ti, and $M^4$ is one or more elements selected from the group consisting of P, As, and V).

As the garnet-type oxide, there is a Li-La-Zr-based oxide such as $Li_7La_3Zr_2O_{12}$ (LLZ).

The oxide-based solid electrolyte may be a crystalline material or an amorphous material. Examples of the amorphous solid electrolyte include a Li-B-O compound such as $Li_3BO_3$, $Li_2B_4O_7$, and $LiBO_2$. The oxide-based solid electrolyte preferably contains an amorphous material.

(Sulfide-Based Solid Electrolyte)

As the sulfide-based solid electrolyte, there are a $Li_2S$-$P_2S_5$ based compound, a $Li_2S$-$SiS_2$-based compound, a $Li_2S$-$GeS_2$-based compounds, a $Li_2S$-$B_2S_3$-based compound, a $Li_2S$-$P_2S_3$-based compound, a LiI-$Si_2S$-$P_2S_5$, a LiI-LizS-PzOs, LiI-$Li_3PO_4$-$P_2S_5$, $Li_{10}GeP_2S_{12}$, and the like.

In this specification, the expression "-based compound" indicating the sulfide-based solid electrolyte is used as a general term for solid electrolytes primarily containing raw materials such as "$Li_2S$" and "$P_2S_5$" described before the "-based compound". Examples of the $Li_2S$-$P_2S_5$-based compound include a solid electrolyte containing $Li_2S$ and $P_2S_5$, and further containing other raw materials. The $Li_2S$-$P_2S_5$-based compound also includes a solid electrolyte having a different mixing ratio of $Li_2S$ and $P_2S_5$.

As the $Li_2S$-$P_2S_5$-based compound, there are $Li_2S$-$P_2S_5$, $Li_2S$-$P_2S_5$-LiI, $Li_2S$-$P_2S_5$-LiCl, $Li_2S$-$P_2S_5$-LiBr, $Li_2S$-$P_2S_5$-$Li_2O$, $Li_2S$-$P_2S_5$-$Li_2O$-LiI, $Li_2S$-$P_2S_5$-$Z_mS_n$ (m and n are positive numbers, and Z is Ge, Zn, or Ga), and the like.

As the $Li_2S$-$SiS_2$-based compound, there are $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$SiS_2$-$Li_3PO_4$, $Li_2S$-$SiS_2$-$Li_2SO_4$, $Li_2S$-$SiS_2$-$Li_xMO_y$ (x and y are positive numbers, and M is P, Si, Ge, B, Al, Ga, or In), and the like.

As the $Li_2S$-$GeS_2$-based compound, there are $Li_2S$-$GeS_2$, $Li_2S$-$GeS_2$-$P_2S_5$, and the like.

The sulfide-based solid electrolyte may be a crystalline material or an amorphous material. The sulfide-based solid electrolyte preferably contains an amorphous material.

(Hydride-Based Solid Electrolyte)

As the hydride-based solid electrolyte material, there are $LiBH_4$, $LiBH_4$-3KI, $LiBH_4$-$PI_2$, $LiBH_4$-$P_2S_5$, $LiBH_4$-$LiNH_2$, $3LiBH_4$-LiI, $LiNH_2$, $Li_2AlH_6$, $Li(NH_2)_2I$, $Li_2NH$, $LiGd(BH_4)_3Cl$, $Li_2(BH_4)(NH_2)$, $Li_3(NH_2)I$, $Li_4(BH_4)(NH_2)_3$, and the like.

Examples of the polymer-based solid electrolyte include an organic polymer electrolyte such as a polyethylene oxide-based polymer compound, or a polymer compound containing one or more selected from the group consisting of a polyorganosiloxane chain and a polyoxyalkylene chain. A so-called gel type in which a non-aqueous electrolytic solution is held in a polymer compound can also be used.

Two or more kinds of solid electrolytes can be used in combination as long as the effects of the invention are not impaired.

In addition, in a case of using a solid electrolyte in a lithium secondary battery of the present embodiment, there may be cases where the solid electrolyte serves as the separator, and in such a case, the separator may not be required. Furthermore, polyethylene beads or polypropylene beads may be mixed in the solid electrolyte layer to impart a shutdown function to the solid electrolyte layer.

As the polyethylene beads or polypropylene beads, the same material as the polyethylene beads or polypropylene beads which may be used for the ceramic separator can be used.

The ratio of the polyethylene beads or polypropylene beads to the total amount of the solid electrolyte layer is preferably 1% or more and less than 10%, and more preferably 2% or more and 5% or less.

<<Cathode>>

The cathode has a cathode active material.

As the cathode active material, a lithium-containing compound or a compound containing another metal can be used. Examples of the lithium-containing compound include a lithium cobalt composite oxide having a layered structure, a lithium nickel composite oxide having a layered structure, a lithium manganese composite oxide having a spinel structure, and a lithium iron phosphate having an olivine structure.

Examples of the compound containing another metal include oxides such as titanium oxide, vanadium oxide, and manganese dioxide, and sulfides such as titanium sulfide and molybdenum sulfide.

(Conductive Material)

As a conductive material, a carbon material can be used. As the carbon material, there are graphite powder, carbon black (for example, acetylene black), a fibrous carbon material, and the like. Since carbon black is fine particles and has a large surface area, the addition of a small amount of carbon black to a cathode mixture increases the conductivity inside the cathode and thus improves charge/discharge efficiencies and output characteristics.

The ratio of the conductive material in the cathode mixture is preferably 5 parts by mass or more and 20 parts by mass or less with respect to 100 parts by mass of the cathode active material. In a case of using a fibrous carbon material such as graphitized carbon fiber or carbon nanotube as the conductive material, the ratio can be reduced.

(Binder)

As a binder, a thermoplastic resin can be used. As the thermoplastic resin, there are fluorine resins such as polyvinylidene fluoride, polytetrafluoroethylene, tetrafluoroethylene-hexafluoropropylene-vinylidene fluoride copolymers, hexafluoropropylene-vinylidene fluoride copolymers, and tetrafluoroethylene-perfluorovinyl ether copolymers; and polyolefin resins such as polyethylene and polypropylene.

These thermoplastic resins may be used as a mixture of two or more. By using a fluorine resin and a polyolefin resin as the binder and setting the ratio of the fluorine resin to the entire cathode mixture to 1 mass% or more and 10 mass% or less and the ratio of the polyolefin resin to 0.1 mass% or more and 2 mass% or less, a cathode mixture having both high adhesion to a cathode current collector and high bonding strength in the cathode mixture can be obtained.

(Cathode Current Collector)

As the cathode current collector, a strip-shaped member formed of a metal material such as Al, Ni, or stainless steel as the forming material can be used. Among these, it is preferable to use Al as the forming material and process Al into a thin film shape because Al can be easily processed and is cheap.

As a method of causing the cathode current collector to hold the cathode mixture, there is a method of press-forming the cathode mixture on the cathode current collector. In addition, the cathode mixture may be held by the cathode current collector by forming the cathode mixture into a paste using an organic solvent, applying the obtained paste of the cathode mixture to at least one side of the cathode current collector, drying the paste, and pressing the paste to be fixed.

In a case of forming the cathode mixture into a paste, as an organic solvent which can be used, there are amine solvents such as N,N-dimethylaminopropylamine and diethylenetriamine; ether solvents such as tetrahydrofuran; ketone solvents such as methyl ethyl ketone; ester solvents such as methyl acetate; and amide solvents such as dimethylacetamide and N-methyl-2-pyrrolidone.

Examples of a method of applying the paste of the cathode mixture to the cathode current collector include a slit die coating method, a screen coating method, a curtain coating method, a knife coating method, a gravure coating method, and an electrostatic spraying method.

The cathode can be manufactured by the method mentioned above.

<Manufacturing Method 1 of Laminate for Lithium Secondary Battery>

The laminate of the present embodiment can be manufactured by applying a separator forming composition to one surface of the aluminum anode and drying the separator forming composition to remove the solvent.

As the separator forming composition, for example, a composition of alumina and 1% hydroxypropyl methylcellulose can be used.

It is preferable that the separator forming composition is prepared to have a solid content concentration of 40% or more and 60% or less.

A method of applying the separator forming composition to one surface of the aluminum anode is not particularly limited, and for example, an application method using an applicator can be used.

The coating film thickness of the separator forming composition can be appropriately adjusted in a range of, for example, 100 μm or more and 250 μm or less.

Conditions for drying the coating film of the separator forming composition may be appropriately adjusted depending on the coating film thickness and the kind of the solvent. In the present embodiment, for example, heat drying, blast drying, and vacuum drying can be used. In a case of heat drying, for example, drying may be performed at a temperature of 50°C or higher and 100°C or lower for 30 minutes to 5 hours.

<Manufacturing Method 2 of Laminate for Lithium Secondary Battery>

The laminate of the present embodiment may be manufactured by laminating a separator that has been formed in advance on an aluminum anode.

As a method of forming the separator in advance, first, the separator forming composition is applied to a base material. Next, the separator forming composition is dried to remove the solvent, such that a coating film is formed. Furthermore, the formed coating film is peeled off from the base material to obtain a separator.

By laminating the obtained separator on the aluminum anode, the laminate of the present embodiment can be obtained.

As the base material, for example, a base material made of polyethylene terephthalate can be used.

<Lithium Secondary Battery>

The lithium secondary battery of the present embodiment includes the laminate of the present embodiment.

Hereinafter, the lithium secondary battery according to the present embodiment will be described with reference to the drawings. The lithium secondary battery of the present embodiment may be a liquid-based lithium secondary battery having an electrolytic solution, or may be a solid electrolyte type lithium secondary battery.

[Liquid-Based Lithium Secondary Battery]

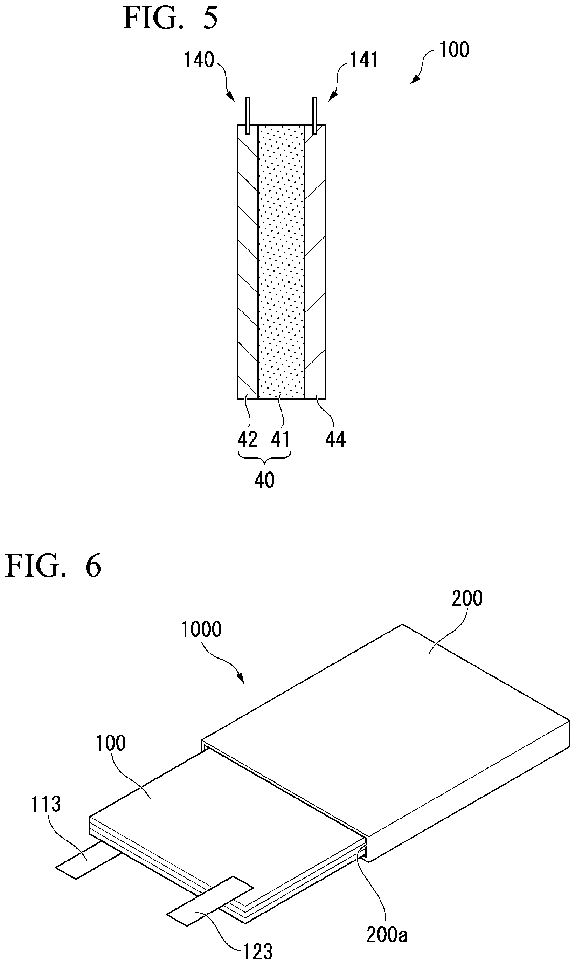

A lithium secondary battery 1000 shown in Fig. 5 has a cathode 44 and a laminate 40. The laminate 40 has an aluminum anode 42 and a ceramic separator 41.

The lithium secondary battery 1000 is accommodated in an exterior body 200 shown in Fig. 6. It is preferable that the lithium secondary battery 1000 is accommodated in an exterior body inside 200a, the ceramic separator in the laminate 100 is then impregnated with an electrolytic solution, and the exterior body 200 is sealed.

The lithium secondary battery 1000 may have an external terminal 113 connected to the cathode 44 and an external terminal 123 connected to the aluminum anode 42.

The lithium secondary battery 1000 has an insulator (not shown) that insulates the laminate 100 and the exterior body 200 from each other.

As the exterior body 200, a container formed of a metal material having high corrosion resistance such as aluminum, stainless steel, and nickel-plated steel can be used.

Examples of the shape of the lithium secondary battery 1000 include a coin type, a button type, a paper type (or a sheet type), a cylindrical type, an angular type, and an aluminum laminate type.

[Aluminum Laminate type Lithium Secondary Battery]

In a case where the lithium secondary battery is of an aluminum laminate type, it is preferable to add an excess electrolytic solution in order to prevent the electrolytic solution from being exhausted.

The aluminum anode expands during initial charging and becomes porous during subsequent discharging. Accordingly, pores are formed in the aluminum anode. Then, a volume of the electrolytic solution corresponding to the formed pores will be insufficient. Therefore, it is preferable to add an excess electrolytic solution to prevent a shortage of the electrolytic solution.

The material of leads connected to the aluminum anode and the sheet-shaped cathode can be appropriately selected from nickel, copper, iron, stainless steel, or aluminum. From the viewpoint of potentials, the leads are preferably made of aluminum.

· Electrolytic Solution

The electrolytic solution used for the liquid-based lithium secondary battery will be described.

As an electrolyte contained in the electrolytic solution, there are lithium salts such as $LiClO_4$, $LiPF_6$, $LiAsF_6$, $LiSbF_6$, $LiBF_4$, $LiCF_3SO_3$, $LiN(SO_2CF_3)_2$, $LiN(SO_2C_2F_5)_2$, $LiN(SO_2CF_3)(COCF_3)$, $Li(C_4F_9SO_3)$, $LiC(SO_2CF_3)_3$, $Li_2B_{10}Cl_{10}$, LiBOB (here, BOB refers to bis(oxalato)borate), LiFSI (here, FSI refers to bis(fluorosulfonyl)imide), lower aliphatic carboxylic acid lithium salts, $LiAlCl_4$, and the like, and a mixture of two or more of these may be used. Among these, as the electrolyte, it is preferable to use at least one selected from the group consisting of $LiPF_6$, $LiAsF_6$, $LiSbF_6$, $LiBF_4$, $LiCF_3SO_3$, $LiN(SO_2CF_3)_2$, and $LiC(SO_2CF_3)_3$, which contain fluorine.

As an organic solvent contained in the electrolytic solution, for example, carbonates such as propylene carbonate, ethylene carbonate, dimethyl carbonate, diethyl carbonate, ethyl methyl carbonate, 4-trifluoromethyl-1,3-dioxolan-2-one, and 1,2-di(methoxycarbonyloxy)ethane; ethers such as 1,2-dimethoxyethane, 1,3-dimethoxypropane, pentafluoropropyl methyl ether, 2,2,3,3-tetrafluoropropyl difluoromethyl ether, tetrahydrofuran, and 2-methyltetrahydrofuran; esters such as methyl formate, methyl acetate, propyl propionate, and γ-butyrolactone; nitriles such as acetonitrile and butyronitrile; amides such as N,N-dimethylformamide and N,N-dimethylacetamide; carbamates such as 3-methyl-2-oxazolidone; and sulfur-containing compounds such as sulfolane, dimethyl sulfoxide, and 1,3-propanesultone, or those obtained by introducing a fluoro group into these organic solvents (those in which one or more of the hydrogen atoms of the organic solvent are substituted with a fluorine atom) can be used.

As the organic solvent, it is preferable to use a mixture of two or more thereof. Among these, a mixed solvent containing a carbonate is preferable, and a mixed solvent of a cyclic carbonate and a non-cyclic carbonate and a mixed solvent of a cyclic carbonate and an ether are more preferable. As the mixed solvent of a cyclic carbonate and a non-cyclic carbonate, a mixed solvent containing ethylene carbonate, dimethyl carbonate, and ethyl methyl carbonate is preferable. An electrolytic solution using such a mixed solvent has many features such as a wide operating temperature range, being less likely to deteriorate even when charging or discharging is performed at a high current rate, being less likely to deteriorate even during a long-term use, and being nondegradable even in a case where a graphite material such as natural graphite or artificial graphite is used as the anode active material.

Furthermore, as the electrolytic solution, it is preferable to use an electrolytic solution containing a lithium salt containing fluorine such as $LiPF_6$ and an organic solvent having a fluorine substituent in order to enhance the safety of the obtained lithium secondary battery. A mixed solvent containing ethers having a fluorine substituent, such as pentafluoropropyl methyl ether and 2,2,3,3-tetrafluoropropyl difluoromethyl ether and dimethyl carbonate is even more preferable because the capacity retention ratio is high even when charging or discharging is performed at a high current rate.

The electrolytic solution may contain additives such as tris(trimethylsilyl) phosphate and tris(trimethylsilyl) borate.

[Solid Electrolyte Type Secondary Battery]

The lithium secondary battery may be a solid electrolyte type secondary battery using a solid electrolyte.

The solid electrolyte type secondary battery has a cathode and the laminate of the present embodiment. In the solid electrolyte type secondary battery, the laminate has an aluminum anode and a solid electrolyte layer. In the solid electrolyte type secondary battery, the solid electrolyte layer is in contact with the cathode. In the present embodiment, the cathode preferably has pores on the surface being in contact with the solid electrolyte layer.

It is preferable that the material forming the solid electrolyte fills a part of the pores.

As the solid electrolyte, the above-mentioned solid electrolyte can be used.

When a part of the pores in the cathode is filled with the material forming the solid electrolyte, excellent ionic conductivity can be secured.

The porosity of the cathode is preferably 10% or more and 50% or less, more preferably 20% or more and 50% or less, and particularly preferably 30% or more and 50% or less.

Furthermore, it is preferable that at least 10% of the pores of the cathode are filled with the material forming the solid electrolyte.

<Evaluation Method of Lithium Secondary Battery>

The lithium secondary battery is evaluated by assembling a lithium secondary battery and measuring the discharge capacity retention ratio thereof.

[Production of Laminate for Lithium Secondary Battery]

By the above-mentioned method, a laminate for a lithium secondary battery having a ceramic separator on one surface of an aluminum anode is produced.

[Production of Cathode]

90 parts by mass of lithium cobalt oxide as a cathode active material, 5 parts by mass of polyvinylidene fluoride as a binder, and 5 parts by mass of acetylene black as a conductive material are mixed, and furthermore 70 parts by mass of N-methyl-2-pyrrolidone is mixed therein, thereby producing an electrode mixture for the cathode.
The obtained electrode mixture is applied onto an aluminum foil having a thickness of 15 $\mu$m, which is a current collector, by a doctor blade method. The applied electrode mixture is dried at 60°C for 2 hours and then vacuum-dried at 150°C for 10 hours to volatilize N-methyl-2-pyrrolidone. The amount of the cathode active material applied after the drying is 21.5 mg/cm$^2$.
The obtained laminate of the electrode mixture layer and the current collector is rolled, and cut into a disk shape of $\varphi$14 mm, thereby manufacturing a cathode, which is a laminate of a cathode mixture layer containing lithium cobalt oxide as the forming material and the current collector.

[Production of Electrolytic Solution]

In a mixed solvent prepared by mixing ethylene carbonate (EC) and diethyl carbonate (DEC) at EC:DEC = 30:70 (volume ratio), LiPF$_6$ is dissolved to 1 mol/liter, thereby producing an electrolytic solution.

[Production of Lithium Secondary Battery]

A cathode is disposed on the ceramic separator of the above laminate. This is accommodated in a battery case (standard 2032), the above electrolytic solution is injected, and the battery case is sealed, whereby a coin type (or the like) lithium secondary battery having a diameter of 20 mm and a thickness of 3.2 mm is produced.

[Charge/Discharge Evaluation]

[Charge/Discharge Evaluation: Initial Charge/Discharge]

The separator is sufficiently impregnated with the electrolytic solution by allowing the coin type non-aqueous electrolyte secondary battery to stand at room temperature for 10 hours.
Next, initial charging and discharging are performed by performing constant current constant voltage charging for 5 hours in which constant current charging to 4.2 V at 1 mA is performed at room temperature and constant voltage charging at 4.2 V is then performed, and thereafter performing constant current discharging in which discharging (release of Li from Al) to 3.0 V at 1 mA is performed.

[Examples]

Next, the present invention will be described in more detail with reference to examples.

<Compositional Analysis of Metal Anode>

The amounts of metal elements in an aluminum-containing metal were quantified using an optical emission spectrometer (model: ARL-4460, manufactured by Thermo Fisher Scientific).

<Observation of Metal Phase and Binarization Processing>

· Sample Production

A plate-shaped aluminum-containing metal having a thickness of 18 mm obtained by the method described later was rolled into a foil having a thickness of 0.5 mm. Thereafter, the foil was cut perpendicular to the rolling direction. The cut surface was polished with emery paper, buffed, and electropolished for 20 seconds. Thereafter, silicon forming a non-aluminum metal phase exposed on the cut surface was removed by etching with a 1.0 mass% sodium hydroxide aqueous solution.

Next, the obtained cross section was observed using a metallurgical microscope (Nikon EPIPHOT 300) at a magnification of 200 times.

Using image analysis software (Image-Pro Plus), the obtained image was binarized for simple binarization of the aluminum metal phase to white and the non-aluminum metal phase to black.

<Measurement of Average Corrosion Rate>

[Immersion Conditions]

The aluminum-containing metal obtained by the method described later was formed into a test metal piece having a size of 40 mm in length, 40 mm in width, and 0.5 mm in thickness. The surface of the test metal piece was washed with ethanol. The test metal piece was immersed in a 3.5% NaCl aqueous solution adjusted to a pH of 3 using acetic acid as a pH adjuster, and the test metal piece was taken out after 72 hours. As for the immersion temperature, the temperature of the liquid was set to 30°C.

The degree of corrosion was represented by the amount of corrosion loss per day for a surface area of 1 mm$^2$ of the test metal piece in mg. That is, the degree of corrosion was calculated by the following expression. A precision balance or the like was used for measuring the mass.

$$\text{Degree of corrosion} = (\text{mass before immersion of test metal piece (mg)} - \text{mass after immersion of test metal piece (mg)}) / (\text{surface area of test metal piece} \times \text{number of test days})$$

From the obtained degree of corrosion, the corrosion rate was calculated by the following method.

$$\text{Corrosion rate (mm/year)} = [\text{degree of corrosion} \times 365] / \text{density of test piece (g/cm}^3)$$

(Vickers Hardness)

As an index of the hardness of the aluminum-containing metal obtained by the method described later, the Vickers hardness (HV0.05) was measured using a micro Vickers hardness tester.

The Vickers hardness is a value measured according to JIS Z 2244:2009 "Vickers hardness test - Test method". A micro Vickers hardness tester of Shimadzu Corporation was used for the measurement.

The Vickers hardness was measured by pressing a square-based pyramid diamond indenter into the surface of a test piece (metal foil), releasing the force (test force) pressing the indenter, and then calculating the diagonal length of the indentation left on the surface.

In the present example, the micro Vickers hardness scale HV0.05 at a test force of 0.05 kgf (= 0.4903 N) was adopted.

<Removal of Surface Coating by Argon Ion Milling (Flat Surface Argon Ion Milling Method)>

An aluminum anode was attached to a holder for a flat surface argon ion milling method, and a surface coating suitable for electron backscatter diffraction measurement was removed by an ion milling device to obtain a clean surface.

Processing conditions for the ion milling were as follows.

> Device: IB-19520CCP (manufactured by) JEOL Ltd.
> Acceleration voltage: 6 kV
> Processing time: 0.5 hours
> Atmosphere: Air
> Temperature: Room temperature

Next, for the surface of the aluminum anode with the clean surface, an electron backscatter diffraction image was acquired using a scanning electron microscope. Conditions for acquiring the electron backscatter diffraction image were as follows.

> Device (scanning electron microscope): JSM-7900F (manufactured by) JEOL Ltd.
> Device (Electron Backscatter Diffraction Detector): Oxford Instruments (manufactured by) Symmetry
> Acceleration voltage: 15 kV
> Current value: 72.5 nA

The obtained diffraction pattern was taken into a computer, and the surface of the aluminum anode was scanned while simultaneously performing crystal orientation analysis. The pixel size at the time of scanning was 1 $\mu$m, and the measurement was performed over a region of 12 mm$^2$.

In the above measurement, indexing of crystals was performed at each measurement point (measurement pixel) such that the crystal orientation could be obtained, and the crystal orientation calculated at each measurement point was recorded on the computer.

As for the index related to the plane orientation, a cumulative frequency distribution curve of the absolute value of an angle formed by a rolling direction of the aluminum anode and a normal to a (111) plane of the aluminum-containing metal crystal was obtained from the crystal orientation information at each measurement point recorded on the computer.

«Example 1»

[Production of Aluminum Anode]

A silicon-aluminum alloy used in Example 1 was manufactured by the following method.

High-purity aluminum (purity: 99.99 mass% or more) and silicon (purity: 99.999 mass% or more) manufactured by Kojundo Chemical Laboratory Co., Ltd. were heated to 760°C and held, whereby a molten silicon-aluminum alloy having a silicon content of 1.0 mass% was obtained.

Next, the molten alloy was cleaned by being held at a temperature of 740°C for 2 hours under the condition of a degree of vacuum of 50 Pa.

The molten alloy was cast in a cast iron mold (22 mm × 150 mm × 200 mm) dried at 150°C to obtain an ingot.

Rolling was performed under the following conditions. After both surfaces of the ingot were subjected to scalping by 2 mm, cold rolling was performed from a thickness of 18 mm at a working ratio of 99.4%. The thickness of the obtained rolled material was 100 $\mu$m.

A high-purity aluminum-silicon alloy foil (thickness 100 $\mu$m) having an aluminum purity of 99.999% and a silicon content of 1.0 mass% was cut into a disk shape of φ14 mm to manufacture an aluminum anode 11.

As a result, the ratio of the area corresponding to the non-aluminum metal phase of the aluminum anode 11 was 4%.

The number density of a non-aluminum metal compound particles in which the particle size of the non-aluminum metal compound particles was 0.1 $\mu$m or more and less than 100 $\mu$m, which were observed in a case of observing the cross section of the foil-shaped aluminum anode 11 having a thickness of 0.5 mm, was 318 /mm$^2$.

Furthermore, in the aluminum anode 11, the number density of the non-aluminum metal compound particles having a particle size of 100 $\mu$m or more was 9 /mm$^2$.

Regarding the particle size of the non-aluminum metal compound particle, when a projected image of the cross-sectional shape of the non-aluminum metal compound particle from an SEM image photograph having a magnification of 10,000 times was sandwiched between parallel lines drawn in a certain direction, the distance (unidirectional particle diameter) between the parallel lines was measured as the particle size of the non-aluminum metal compound particle.

In addition, the "number density" means the density of the number of non-aluminum metal compound particles present per unit area in an SEM image photograph having a magnification of 10,000 times.

[Production of Laminate]

Alumina (product name "AKP3000" manufactured by Sumitomo Chemical Co., Ltd.) and 1% hydroxypropyl methylcellulose were mixed at a ratio at which the solid content concentration became 50%, and were stirred using a thin-film spin system high-speed mixer (FILMIX manufactured by PRIMIX Corporation) at 3000 rpm for 3 minutes to obtain a slurry composition.

The slurry composition was applied to one surface of the aluminum anode 11 using an applicator to form a coating film having a thickness of 230 $\mu$m.

Thereafter, the coating film was dried at 60°C for 1 hour to manufacture a laminate for a lithium secondary battery having a ceramic separator on one surface of the aluminum anode 11.

The obtained laminate for a lithium secondary battery was cut into a disk shape of $\varphi$16 mm (ceramic separator of the laminate).

[Production of Cathode]

90 parts by mass of lithium cobalt oxide (product name: CELLSEED, manufactured by Nippon Chemical Industrial Co., Ltd., average particle size (D50) 10 $\mu$m) as a cathode active material, 5 parts by mass of polyvinylidene fluoride (manufactured by Kureha Corporation) as a binder, and 5 parts by mass of acetylene black (product name: DENKA BLACK, manufactured by Denka Company Limited) as a conductive material were mixed, and furthermore 70 parts by mass of N-methyl-2-pyrrolidone was mixed therein, thereby producing an electrode mixture for the cathode.

The obtained electrode mixture was applied onto an aluminum foil having a thickness of 15 $\mu$m, which was a current collector, by a doctor blade method. The applied electrode mixture was dried at 60°C for 2 hours and then vacuum-dried at 150°C for 10 hours to volatilize N-methyl-2-pyrrolidone. The amount of the cathode active material applied after the drying was 21.5 mg/cm$^2$.

The obtained laminate of the electrode mixture layer and the current collector was rolled, and cut into a disk shape of $\varphi$14 mm, thereby manufacturing a cathode, which was a laminate of a cathode mixture layer containing lithium cobalt oxide as the forming material and the current collector.

[Production of Electrolytic Solution]

In a mixed solvent prepared by mixing ethylene carbonate (EC) and diethyl carbonate (DEC) at EC:DEC = 30:70 (volume ratio), LiPF$_6$ is dissolved to 1 mol/liter, thereby producing an electrolytic solution.

[Production of Lithium Secondary Battery]

A cathode was disposed on the ceramic separator of the above laminate. This was accommodated in a battery case (standard 2032), the above electrolytic solution was injected, and the battery case was sealed, whereby a coin type (full cell) lithium secondary battery having a diameter of 20 mm and a thickness of 3.2 mm was produced.

[Charge/Discharge Evaluation]

[Charge/Discharge Evaluation: Initial Charge/Discharge]

The separator was sufficiently impregnated with the electrolytic solution by allowing the coin type non-aqueous electrolyte secondary battery to stand at room temperature for 10 hours.

Next, initial charging and discharging are performed by performing constant current constant voltage charging for 5 hours in which constant current charging to 4.2 V at 1 mA is performed at room temperature and constant voltage charging at 4.2 V is then performed, and thereafter performing constant current discharging in which discharging (release of Li from Al) to 3.0 V at 1 mA is performed.

[Charge/Discharge Curve]

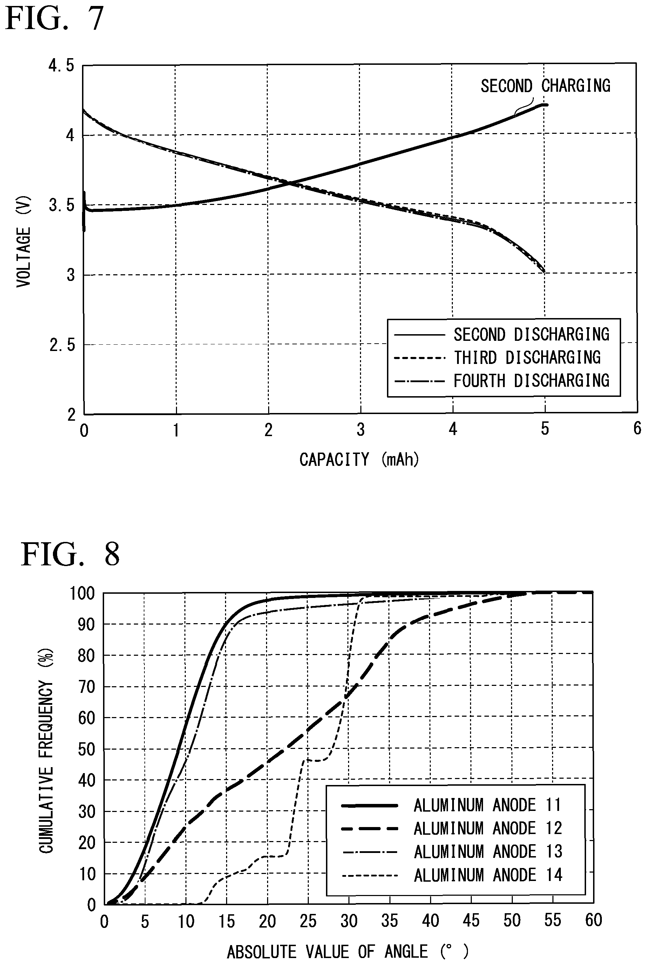

After the initial charging and discharging, charging at 1 mA and discharging at 1 mA were repeated under the same conditions as in the initial charging and discharging. Second, third, and fourth charge/discharge curves are shown in Fig. 7.

As shown in Fig. 7, since the lithium secondary battery manufactured using the laminate of Example 1 was charged and discharged smoothly, it could be confirmed that a short circuit was prevented and charging and discharging were possible.

In addition, as a result of disassembling and observing the battery, no crack was visually observed in the separator of the aluminum anode 11. It could be seen that in the laminate for a lithium secondary battery obtained therefrom, the aluminum anode 11 and the separator moved together when deformed during charging and discharging.

(Aluminum Anode 12)

An aluminum anode 12 was manufactured in the same manner as in Example 1 except that a molten aluminum-silicon alloy having a silicon content of 1.0 mass% was obtained, cold rolled, and then heat-treated at 350°C for 3 hours.

(Aluminum Anode 13)

An aluminum foil (thickness 100 $\mu$m) having a purity of 99.99% was used as an aluminum anode 13.

(Aluminum Anode 14)

An aluminum foil (thickness 100 $\mu$m) having a purity of 99.99%, which was subjected to a heat treatment at 350°C for 3 hours after cold rolling, was used as an aluminum anode 14.
Fig. 8 shows cumulative frequency distribution curves of the absolute values of angles formed by the rolling direction of the aluminum anodes 11 to 14 and a normal to a (111) plane, which were obtained by measuring the aluminum anodes 11 to 14 by an electron backscatter diffraction method.
Table 1 shows the angles at which the cumulative frequency of the aluminum anodes 11 to 14 became 50% or more.

[Table 1]

|  | Angle at which cumulative frequency is 50% or more |
| --- | --- |
| Aluminum anode 11 | 9.5° |
| Aluminum anode 12 | 22.5° |
| Aluminum anode 13 | 10.5° |
| Aluminum anode 14 | 28.5° |

<Manufacturing of Solid Electrolyte Lithium Secondary Battery>

[Solid Electrolyte 1]

A solid electrolyte 1 was manufactured as a sulfide-based solid electrolyte.
Specifically, 15 g and 5 g of $Li_2S$ (manufactured by Furuuchi Chemical Corporation) and $P_2S_5$ (manufactured by Merck) were weighed in a ball mill container to occupy 75 parts by mass and 25 parts by mass, respectively, and were crushed and mixed using zirconia balls for 24 hours, whereby the solid electrolyte 1 was adjusted.

[Solid Electrolyte 2]

2 g of FLO-BEADS (LE-1080) manufactured by Sumitomo Seika Chemicals Co., Ltd. was added to 20 g of the solid electrolyte 1 after the ball milling, and the mixture was further mixed for 1 hour, whereby a solid electrolyte 2 was prepared.

[Production of Cathode 1]

62 parts by mass of $LiNi_{0.6}Mn_{0.2}Co_{0.2}O_2$ coated with niobium as a cathode active material, 5 parts by mass of acetylene black as a conductive material, and furthermore 30 parts by mass of the solid electrolyte 1 were mixed. In the above mixed powder, 3 parts by mass of butadiene rubber (BR) as a binder and 60 parts by mass of heptane as a dispersion medium were mixed, whereby a slurry for a cathode active material was prepared.
As a mixing method, a thin-film spin system high-speed mixer was used as in the "production of a laminate for a lithium secondary battery having a ceramic separator".
The slurry for a cathode active material was applied to an aluminum current collector (A1085 having a thickness of 15 $\mu$m) using an applicator, and dried at 60°C (to remove heptane of the dispersion medium), thereby obtaining a coating film. A 70 μm cathode sheet was produced by compacting the coating film with a roll press. The above cathode sheet was punched to φ14 mm to produce a cathode 1.

[Cathode 2]

A cathode 2 was produced in a similar manner except that the solid electrolyte of the cathode 1 was changed to the solid electrolyte 2.

[Anode 1]

A slurry for the solid electrolyte 1 was prepared by mixing 97 parts by mass of the solid electrolyte 1, 3 parts by mass of butadiene rubber (BR) as a binder, and 60 parts by mass of heptane as a dispersion medium.
As a mixing method, the slurry was produced using a thin-film spin system high-speed mixer as in the production of the cathode 1, applied to one surface of the aluminum anode 11 using an applicator, and dried at 60°C (to remove heptane of the dispersion medium), thereby obtaining a coating film. The coating film was formed into a large thickness with a roll press, whereby an anode sheet integrated with the solid electrolyte 1 having a thickness of 230 μm was produced. The anode integrated with the solid electrolyte 1 was punched to φ16 mm to produce an anode 1.

[Anode 2]

An anode 2 was produced in a similar manner except that the solid electrolyte of the anode 1 was changed to the solid electrolyte 2.

[Production of Solid Electrolyte Lithium Secondary Battery 1]

The cathode 1 and the anode 1 were accommodated in a battery case (standard 2032), and the battery case was sealed, whereby a coin type (full cell) solid electrolyte lithium secondary battery 1 having a diameter of 20 mm and a thickness of 3.2 mm was produced.

[Production of Solid Electrolyte Lithium Secondary Battery 2]

A solid electrolyte lithium secondary battery 2 was produced in the same manner as the solid electrolyte lithium secondary battery 1 except that the anode 2 was used as the anode.

[Production of Solid Electrolyte Lithium Secondary Battery 3]

A solid electrolyte lithium secondary battery 3 was produced in the same manner as the solid electrolyte lithium secondary battery 1 except that the cathode 2 was used as the cathode.

[Production of Solid Electrolyte Lithium Secondary Battery 4]

A solid electrolyte lithium secondary battery 4 was produced in the same manner as the solid electrolyte lithium secondary battery 1 except that the anode 2 was used as the anode and the cathode 2 was used as the cathode.

<Evaluation of Solid Electrolyte Lithium Secondary Batteries 1 to 4>

The solid electrolyte lithium secondary batteries 1 to 4 of the present embodiment were evaluated by assembling the lithium secondary batteries and performing a charge/discharge test.

[Charge/Discharge Evaluation: Charging and Discharging]

The cathode and the solid electrolyte of the anode were bonded to each other by allowing the coin type solid electrolyte lithium secondary batteries 1 to 4 to stand at room temperature for 10 hours.
Next, constant current constant voltage charging was performed for 50 hours in which constant current charging to 4.2 V at 0.1 mA was performed at room temperature and constant voltage charging at 4.2 V was then performed. The battery voltage after being left for 1 hour was 4.0 V Subsequently, constant current discharging (release of Li from Al) to 3.0 V at 0.1 mA was performed. The battery voltage after 1 hour was 3.6 V.

<Evaluation of Solid Electrolyte Lithium Secondary Batteries 1 to 4 after Heating>

The solid electrolyte lithium secondary batteries 1 to 4 of the present embodiment were evaluated by assembling the lithium secondary batteries, heating the batteries, and then performing a charge/discharge test.

[Heating Treatment]

The coin type solid electrolyte lithium secondary batteries 1 to 4 were allowed to stand at room temperature for 10 hours and then at 150°C for 5 hours. The heating treatment was performed for the purpose of evaluating the shutdown function of the solid electrolyte lithium secondary batteries.

[Charge/Discharge Evaluation: Charging and Discharging]

Next, constant current constant voltage charging was performed for 50 hours in which constant current charging to 4.2 V at 0.1 mA was performed at room temperature and constant voltage charging at 4.2 V was then performed. The results are shown in Table 2. In Table 2, "possible" means that the solid electrolyte lithium secondary battery does not have a shutdown function, but it can be safely charged and discharged even after being stored at a high temperature, and "impossible" means that the solid electrolyte lithium secondary battery has a shutdown function when stored at a high temperature. In the solid electrolyte lithium secondary batteries 2 to 4, the battery voltage after being left for 1 hour displayed 1.0 to 2.0 V and was not stable.

As shown in Table 2 below, in the solid electrolyte lithium secondary battery 1, since the solid electrolyte and the aluminum anode were integrated, the solid electrolyte and the aluminum anode were less likely to be shifted or peeled from each other, and charging and discharging were possible.

As shown in Table 2 below, it was thought that in the solid electrolyte lithium secondary batteries 2 to 4, FLO-BEADS (FB) of the solid electrolyte reduced the lithium ion conductivity of the solid electrolyte by being heated, and thus the shutdown function was exhibited, so that the progress of electrochemical reactions was stopped and charging could not be performed.

From the above description, it was found that a solid electrolyte lithium secondary battery having high temperature resistance could be manufactured by using the laminate for a lithium secondary battery of the present invention. From this effect, it can be fully inferred that the battery specifications can be changed as appropriate according to the application and environment in which the battery is used.

[Table 2]

| Solid electrolyte battery | Anode Presence of absence of FB | Cathode Presence of absence of FB | Charging and discharging without heating | Charging and discharging after heating |
|---|---|---|---|---|
| 1 | Absent | Absent | Possible | Possible |
| 2 | Present | Absent | Possible | Impossible |
| 3 | Absent | Present | Possible | Impossible |
| 4 | Present | Present | Possible | Impossible |

[Reference Signs List]

40, 50, 60, 70, 100: Laminate

41: Ceramic separator

42: Aluminum anode

43: Solid electrolyte layer

44: Cathode

113, 123: External terminal

1000: Lithium secondary battery

200: Exterior body

**Claims**

1. A laminate for a lithium secondary battery comprising:

   a plate-shaped aluminum anode configured to occlude and release lithium ions; and
   a ceramic separator or a solid electrolyte layer laminated on one of principal surfaces of the aluminum anode.

2. The laminate for a lithium secondary battery according to Claim 1,
   wherein the aluminum anode and the ceramic separator or the solid electrolyte layer are integrated.

3. The laminate for a lithium secondary battery according to Claim 1 or 2,
   wherein the aluminum anode, the ceramic separator or the solid electrolyte layer, and a plate-shaped cathode configured to occlude and release lithium ions are laminated in this order.

4. The laminate for a lithium secondary battery according to any one of Claims 1 to 3,
   wherein the aluminum anode is formed of a metal in which a non-aluminum metal phase is dispersed in an aluminum metal phase.

5. The laminate for a lithium secondary battery according to any one of Claims 1 to 4,

   wherein the aluminum anode has an average corrosion rate of 0.2 mm/year or less measured by an immersion test under the following immersion conditions,
   [immersion conditions]

   immersion solution: 3.5% NaCl aqueous solution adjusted to a pH of 3 using acetic acid as a pH adjuster,
   immersion temperature: 30°C,
   immersion time: 72 hours.

6. The laminate for a lithium secondary battery according to any one of Claims 1 to 5,
   wherein the aluminum anode has a Vickers hardness of 10 Hv or more and 70 Hv or less.

7. The laminate for a lithium secondary battery according to any one of Claims 1 to 6,

   wherein the aluminum anode is a rolled material, and
   in a cumulative frequency distribution curve of an absolute value of an angle formed by a rolled surface of the aluminum anode and a normal to a {111} plane, which is obtained by measuring a surface of the aluminum anode by an electron backscatter diffraction method, when a total is set to 100%, an angle at which a cumulative frequency from a low angle side is 50% or more is 20° or less.

8. The laminate for a lithium secondary battery according to any one of Claims 1 to 7,

   wherein the aluminum anode is a rolled material, and
   in a cumulative frequency distribution curve of an absolute value of an angle formed by a rolling direction of the aluminum anode and a normal to a {111} plane, which is obtained by measuring a surface of the aluminum anode by an electron backscatter diffraction method,
   when a total is set to 100%, an angle at which a cumulative frequency from a low angle side is 50% or more is 20° or less.

FIG. 1

40

41

42

42a

FIG. 2

50

43

42

42a

FIG. 3

60

44a

44

41

42

42a

FIG. 4

70

44a

44

43

42

42a

## FIG. 5

## FIG. 6

# FIG. 7

# FIG. 8

## INTERNATIONAL SEARCH REPORT

| | International application No. |
|---|---|
| | PCT/JP2021/014744 |

**A. CLASSIFICATION OF SUBJECT MATTER**
H01M 10/0585(2010.01)i; H01M 4/134(2010.01)i; H01M 4/46(2006.01)i; H01M 10/0562(2010.01)i; H01M 50/434(2021.01)i; H01M 50/46(2021.01)i
FI: H01M10/0585; H01M10/0562; H01M4/134; H01M4/46; H01M50/434; H01M50/46
According to International Patent Classification (IPC) or to both national classification and IPC

**B. FIELDS SEARCHED**

Minimum documentation searched (classification system followed by classification symbols)
H01M10/0585; H01M4/134; H01M4/46; H01M10/0562; H01M50/434; H01M50/46

Documentation searched other than minimum documentation to the extent that such documents are included in the fields searched
| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2019-501478 A (REAL POWER INDUSTRIAL LIMITED COMPANY) 17 January 2019 (2019-01-17) claims 1, 3, 18, table 1, example 1, table 9, example 153 | 1, 3 |
| Y | claims 1, 3, 18, table 1, example 1, table 9, example 153 | 2, 4–8 |
| X | JP 8-148180 A (MATSUSHITA ELECTRIC INDUSTRIAL CO., LTD.) 07 June 1996 (1996-06-07) paragraph [0051], example 66 | 1–3 |
| Y | paragraph [0051], example 66 | 4–8 |
| X | WO 2019/151376 A1 (HONDA MOTOR CO., LTD.) 08 August 2019 (2019-08-08) claims 1, 5 | 1–3 |
| Y | claims 1, 5 | 4–8 |

☒ Further documents are listed in the continuation of Box C.    ☒ See patent family annex.

| | |
|---|---|
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 18 June 2021 (18.06.2021) | 29 June 2021 (29.06.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

| International application No. |
| --- |
| PCT/JP2021/014744 |

C (Continuation).  DOCUMENTS CONSIDERED TO BE RELEVANT

| Category* | Citation of document, with indication, where appropriate, of the relevant passages | Relevant to claim No. |
| --- | --- | --- |
| Y | JP 2015-191710 A (MURATA MANUFACTURING CO., LTD.) 02 November 2015 (2015-11-02) claim 1 | 2 |
| Y | JP 2012-529747 A (3M INNOVATIVE PROPERTIES COMPANY) 22 November 2012 (2012-11-22) claims 9-18, paragraphs [0011], [0016]-[0025], examples 1-6 | 4-8 |
| A | WO 2019/146231 A1 (SUMITOMO CHEMICAL CO., LTD.) 01 August 2019 (2019-08-01) claim 1 | 6 |

Form PCT/ISA/210 (continuation of second sheet) (January 2015)

| INTERNATIONAL SEARCH REPORT | International application No. |
| :--- | :--- |
| Information on patent family members | PCT/JP2021/014744 |

| Patent Documents referred in the Report | Publication Date | Patent Family | Publication Date |
| :--- | :--- | :--- | :--- |
| JP 2019-501478 A | 17 Jan. 2019 | US 2018/0342758 A1 claims 1, 3, 18, table 1, example 1, table 9, example 153 WO 2017/190364 A1 WO 2017/190572 A1 EP 3370294 A1 CN 107615550 A KR 10-2018-0066169 A | |
| JP 8-148180 A | 07 Jun. 1996 | US 5677081 A column 17, line 50 to column 18, line 20, example 66 EP 704920 A1 | |
| WO 2019/151376 A1 | 08 Aug. 2019 | (Family: none) | |
| JP 2015-191710 A | 02 Nov. 2015 | (Family: none) | |
| JP 2012-529747 A | 22 Nov. 2012 | US 2010/0310937 A1 claims 9-18, paragraphs [0007], [0031]-[0039], examples 1-6 WO 2010/144320 A2 EP 2441106 A2 KR 10-2012-0036945 A CN 102804457 A | |
| WO 2019/146231 A1 | 01 Aug. 2019 | JP 2019-129059 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020070385 A

- JP 2011228058 A

**Non-patent literature cited in the description**

- *Journal of Japan Institute of Light Metals,* 1987, vol. 37 (2), 146-152